(19) **Europäisches Patentamt / European Patent Office / Office européen des brevets**

(11) **EP 1 747 461 B1**

(12) **EUROPEAN PATENT SPECIFICATION**

(45) Date of publication and mention
of the grant of the patent:
**15.12.2010 Bulletin 2010/50**

(51) Int Cl.:
***G01N 33/543*** *(2006.01)*   ***G01N 27/72*** *(2006.01)*
***G01R 33/12*** *(2006.01)*

(21) Application number: **05744998.5**

(22) Date of filing: **17.05.2005**

(86) International application number:
**PCT/GB2005/001936**

(87) International publication number:
**WO 2005/111615 (24.11.2005 Gazette 2005/47)**

(54) **USE OF MAGNETIC PARTICLE DETECTOR SYSTEM**

VERWENDUNG EINER VORRICHTUNG ZUM NACHWEIS MAGNETISCHER PARTIKELN

UTILISATION D' UN SYSTEME DE DETECTION DE PARTICULES MAGNETIQUES

(84) Designated Contracting States:
**AT BE BG CH CY CZ DE DK EE ES FI FR GB GR HU IE IS IT LI LT LU MC NL PL PT RO SE SI SK TR**

(30) Priority: **17.05.2004 GB 0410976**

(43) Date of publication of application:
**31.01.2007 Bulletin 2007/05**

(73) Proprietor: **Randox Laboratories Ltd.**
**Crumlin, County Antrim BT29 4QY (GB)**

(72) Inventors:
• **KIELY, Janice**
 **Bristol BS16 1QY (GB)**
• **HAWKINS, Peter**
 **Bristol BS16 1QY (GB)**
• **LUXTON, Richard**
 **Bristol BS16 1QY (GB)**

(74) Representative: **Skone James, Robert Edmund**
**Gill Jennings & Every LLP**
**The Broadgate Tower**
**20 Primrose Street**
**London EC2A 2ES (GB)**

(56) References cited:
**EP-A- 1 146 347     WO-A-02/31505**
**WO-A-03/054523     US-A1- 2003 012 693**

• **LUXTON R ET AL: "USE OF EXTERNAL MAGNETIC FIELDS TO REDUCE REACTION TIMES IN AN IMMUNOASSAY USING MICROMETER-SIZED PARAMAGNETIC PARTICLES AS LABELS (MAGNETOIMMUNOASSAY)" ANALYTICAL CHEMISTRY, AMERICAN CHEMICAL SOCIETY. COLUMBUS, US, vol. 76, no. 6, 15 March 2004 (2004-03-15), pages 1715-1719, XP001196657 ISSN: 0003-2700**
• **RICHARDSON JULIE ET AL: "A novel measuring system for the determination of paramagnetic particle labels for use in magneto-immunoassays" BIOSENSORS AND BIOELECTRONICS, vol. 16, no. 9-12, December 2001 (2001-12), pages 1127-1132, XP002335571 ISSN: 0956-5663**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The invention relates to a method for using a magnetic particle detector system. The system is particularly useful in connection with binding assays such as immunoassays but can be used in other applications involving the binding of magnetic particles to a reaction surface.

Binding assays use complementary partners in such a way that one of the partners in a sample can be quantified. Typical examples of binding partners include: any antibody and corresponding antigen; hormone and hormone receptor; hormone and hormone binding protein; drug and drug receptor; enzyme and cofactor; chelating or complex-forming agent and an ion. One of the most common forms of binding assay is the immunoassay where the binding partners are antibodies and the targets are antigens. Immunoassays make use of the highly specific and sensitive interactions between antigens and their antibodies. Over the last 30 years they have found applications in many diverse areas including clinical chemistry and environmental monitoring. The high specificity and sensitivity arises from the nature of the interactions between the antigens, which are usually the analyte molecules, and their antibodies.

With a few exceptions (such as techniques based on surface plasmon resonance, vibrating devices, etc.), a label, reporter or marker must be added if the interactions between the antibodies and the antigens are to be quantified. Several different types of labels have been used in immunoassays. Popular labels currently used include radioisotopes, fluorescent and chemiluminescent molecules, enzymes, gold particles and coloured latex beads. Lateral flow or immunochromatographic assays are relatively simple immunoassay techniques using coloured latex beads and an example of which is the very successful Clear Blue one-step pregnancy test originally developed by Unilever. It is also an example of a device that with no sample preparation can produce the result of an analysis in a few minutes without the intervention of a skilled operator.

There is a requirement for more such devices for use in the field in environmental monitoring or for rapid diagnostics such as point-of-care patient and veterinary testing. However, simple lateral flow devices are restricted to applications where it is only necessary to determine whether the concentration of the analyte is above or below a threshold value. If more quantitative measurements are required then elaborate measuring equipment has to be used, usually with different markers, and this adds considerably to the complexity of the technique. Techniques, such as the enzyme-linked immunosorbent assay cannot be readily adapted into rapid, portable, systems as they involve many time-consuming steps (sample separation, washing and incubation) and methods using luminescent labels need optically pure test solutions to reduce light absorption, scattering and fluorescence quenching effects. Washing steps are necessary to remove excess, unreacted (free) label and other unwanted components in the sample (free proteins, excess antibody, etc.) that are likely to interfere in the determination of the amount of bound label in the immunoassay.

Coated paramagnetic particles, PMPs, are currently used in the purification and isolation of antibodies, antigens and other proteins and more recently in immunoassays where they serve to isolate the target antigen within the interacting molecules. PMPs are available in a range of different diameters (typically, 0.1 to 20μm) from several different suppliers. They have a paramagnetic core (usually iron oxide) with a suitable coating to which capture antibody molecules are attached. In a typical automated system, an excess of the coated PMPs is introduced into a test solution containing a mixture of the target antigens (analyte) and other species. Eventually, the antigens become attached to the antibodies on the PMPs. At this, or a later stage, an excess of the appropriately labelled secondary antibody (detecting antibody) is introduced into the test solution, which then reacts with the target antigen (analyte) on the PMPs. The PMPs with their attachments can be easily drawn to one side of the reaction vessel and held there by an external magnet whilst the remaining test solution is flushed away and replaced with clean buffer solution. The PMPs are re-suspended in the buffer solution and the quantity of bound label determined using a technique appropriate for the label. Although the PMPs help to simplify the extraction and washing processes, several steps might still be required, which add to the total time for a complete assay. Another problem is that expensive equipment is usually required to determine the amount of bound label (such as photon-counting equipment for luminescent labels, radiation-counting equipment for radioactive labels, etc.). A magneto-immunoassay system uses the PMPs as the labels, so no additional label is required.

A simple magnetometer to determine the quantity of bound PMP labels is described in EP-A-1146347. The immobilization of the magnetic particle is through, on the one hand, the interaction of a binding partner attached to the reactive surface adjacent to a detecting coil and a complementary binding partner (the target analyte) which is introduced into the system in the sample being analysed, and, on the other hand, the target analyte and another complementary binding partner attached to the particle. This assay format is called a sandwich assay and has a dose response with a positive slope. Similar methods are described in "Use of External Magnetic Fields To Reduce Reaction Times in an Immunoassay Using Micrometer-Sized Paramagnetic Particles as Labels (Magnetoimmunoassay)", Luxton et al, Analytical Chemistry, Vol. 76, No. 6, March 15, 2004 pages 1715-1719; and "A novel measuring system for determination of paramagnetic particle lables for use in magneto-immunoassays", Richardson et al, Biosensors & Bioelectronics 16 (2001) pages 1127-1132.

Alternatively, in a "displacement assay", suitably coated paramagnetic particles are bound to a reaction site. On the addition of sample containing the target analyte, paramagnetic particles are "displaced" from the reaction site due to competitive interaction between the target analyte and analyte immobilized on the paramagnetic particles. This will result in a loss on paramagnetic material from the reaction site. This assay format has a dose response with a negative slope. In this mode the particles may be immobilised on the reactive surface prior to sample being added to the liquid or the particles may be added with the sample or following the sample. Alternatively, in a "competitive assay", a binding partner is attached to the reaction site. A first complementary binding partner (the target analyte), which is introduced to the system in the sample, competes with a second complementary binding partner (the "competitor") to bind to the reaction site. The second complementary binding partner is attached to the magnetic particle. The greater the concentration of target analyte, the fewer magnetic particles will succeed in binding to the reaction site. This form of assay therefore has a dose response with a negative slope.

Various other forms of "competitive assay" exist. For example, the binding partner may be provided on the magnetic particle and the competitor (the second complementary binding partner) on the reaction site. The target analyte, introduced in the sample, competes with the competitor to bind to the magnetic particle. The greater the concentration of target analyte, the fewer magnetic particles will bind to the competitor on the reaction site. Therefore this form of assay also has a negative dose response.

Typically, binding partners are attached to the particle and reactive surface through electrostatic and other non-covalent bonds; covalent bonds through reactive groups on the binding partners and particle or reactive surface; through an intermediary biological molecule attached to the surface as above; or through any process of molecular imprinting or melding. To prevent non-specific binding of either binding partner to the reactive surface or particle during the analytical reaction, a blocking agent is used to bind to vacant binding sites on the reactive surface or particle. Blocking agents used do not bind with either of the binding partners and are typically made from inert proteins or protein hydrolysates, ionic or non-ionic detergents, simple or complex sugars, inert polymers.

The reaction takes place in a liquid designed to promote the interaction of the binding partners. This liquid may contain buffer salts, poly-ionic molecules, polymers, simple or complex sugars and proteins. Binding partners may include any substance of biological or chemical origin such as proteins, nucleic acids, carbohydrates, lipids, drugs, chelating agents, spores, micro-organisms or cells isolated from tissue culture or blood sample or tissue biopsies. "Chemical" substances include non-biological substances such as polymers. Typical examples of binding partners include: any antibody and corresponding antigen, hormone and hormone receptor, hormone and hormone binding protein, drug and drug receptor, enzyme and cofactor, transcription factor and DNA, subunits of a protein complex such as G-proteins, any signalling or transport protein and its control element, lectins and glycoproteins, lectins and carbohydrate moities, receptor protein and lipoprotein, lipid and lipoprotein, DNA and DNA, DNA and RNA, RNA and RNA, PNA and PNA, PNA and DNA, PNA and RNA, cell membrane proteins and virus, cell membrane proteins and spores, cell membrane proteins and bacteria, any cell to cell interaction through any cell surface binding protein such as MHC II and CD4.

In a preferred embodiment, a sandwich immunoassay system is used and magnetic labels are immobilized onto a reaction surface and a magnetometer then determines the quantity of immobilised magnetic labels.

The basic magnetic particle detection system consists of a coil (inductor), which forms part of a resonant network, a detector circuit and a test strip or test vessel. During operation the coil is located close to a reaction surface either on the test strip or in the test vessel. Magnetic particles bound on the reaction surface influence the high frequency magnetic field produced by the coil and cause a change in the inductance of the coil. The magnetic particles may contain paramagnetic, ferrimagnetic, anti-ferromagnetic or ferromagnetic materials. This change in inductance is a function of the quantity of magnetic particles immobilised on the surface. The change in the inductance of the coil is detected by a change in the resonant frequency of an inductance and capacitance (LC) network, of which the coil forms the inductive component and this is used to determine a measure of the number of particles attached to the reaction surface.

This detection system works well but is limited in that it is only able to detect a single target analyte at any one time.

In accordance with a first aspect of the present invention, we provide a method of performing a binding assay using magnetic particle detector system comprising a plurality of reaction surfaces; a corresponding plurality of electrical coils, each located adjacent a respective reaction surface; and a measuring system for measuring the effect of magnetic particles bound to a reaction surface on the inductance of the associated electrical coil, the output of the measuring system being indicative of the quantity of magnetic particles bound to the reaction sites, the method comprising providing different binding partners at the reaction sites; supplying a sample to the reaction vessel or test strip; supplying coated magnetic particles which attach to the binding partners via respective target analytes in the sample whereby the magnetic particles are caused to attach to the reaction sites in the presence of the target analytes in the sample; and monitoring the effect of magnetic particles bound to the reaction surfaces on the inductance of the corresponding coils to detect separately the quantity of magnetic particles attached to each reaction site, wherein the measuring system comprises a plurality of variable capacitors, each capacitor being connected to a respective electrical coil to define a respective test resonant circuit; a plurality of phase locked loops (PLL), each phase locked loop being connected to a respective test resonant circuit to cause the circuit to resonate, and to a respective mixer circuit; a reference resonant circuit and a reference PLL for causing the reference resonant circuit to resonate; each mixer circuit mixing, in use, the resonant frequency of the reference resonant circuit with the resonant frequency of the corresponding test resonant circuit to produce a beat frequency; and a switch to which the beat frequencies are supplied so as to be selectively connected to the measuring system; the measuring system including a controller for adjusting the variable capacitors and the switch.

In accordance with a second aspect of the present invention, we provide a method of performing a binding assay using magnetic particle detector system comprising a plurality of reaction surfaces; a corresponding plurality of electrical coils, each located adjacent a respective reaction surface; and a measuring system for measuring the effect of magnetic particles bound to a reaction surface on the inductance of the associated electrical coil, the output of the measuring system being indicative of the quantity of magnetic particles bound to the reaction sites, the method comprising providing different binding partners at the reaction sites; supplying a sample to the reaction vessel or test strip; supplying coated magnetic particles which attach to the binding partners via respective target analytes in the sample whereby the magnetic particles are caused to attach to the reaction sites in the presence of the target analytes in the sample; and monitoring the effect of magnetic particles bound to the reaction surfaces on the inductance of the corresponding coils to detect separately the quantity of magnetic particles attached to each reaction site, wherein the measuring system comprises a plurality of variable capacitors, each capacitor being connected to a respective electrical coil to define a resonant circuit; an oscillator common to all the resonant circuits; a plurality of phase detectors for detecting the phase differences between the signal from the oscillator and corresponding resonant circuit frequencies and generating a corresponding output signal; a switch to which the output signals are fed and being actuable selectively to supply the output signals to a monitoring system; and a controller for controlling the switch and adjusting the capacitors in response to the output signals from the phase detectors.

In accordance with a third aspect of the present invention, we provide a method of performing a binding assay using magnetic particle detector system comprising a plurality of reaction surfaces; a corresponding plurality of electrical coils, each located adjacent a respective reaction surface; and a measuring system for measuring the effect of magnetic particles bound to a reaction surface on the inductance of the associated electrical coil, the output of the measuring system being indicative of the quantity of magnetic particles bound to the reaction sites, the method comprising providing different binding partners at the reaction sites; supplying a sample to the reaction vessel or test strip; supplying coated magnetic particles which attach to the binding partners whereby the magnetic particles are caused to attach to the reaction sites and whereby, in the presence of the target analytes in the sample, the magnetic particles are caused to detach from the reaction sites due to preferential binding for the target analytes; and monitoring the affect of magnetic particles bound to the reaction surfaces on the inductance of the corresponding coils to detect separately the quantity of magnetic particles attached to each reaction site, wherein the measuring system comprises a plurality of variable capacitors, each capacitor being connected to a respective electrical coil to define a respective test resonant circuit; a plurality of phase locked loops (PLL), each phase locked loop being connected to a respective test resonant circuit to cause the circuit to resonate, and to a respective mixer circuit; a reference resonant circuit and a reference PLL for causing the reference resonant circuit to resonate; each mixer circuit mixing, in use, the resonant frequency of the reference resonant circuit with the resonant frequency of the corresponding test resonant circuit to produce a beat frequency; and a switch to which the beat frequencies are supplied so as to be selectively connected to the measuring system; the measuring system including a controller for adjusting the variable capacitors and the switch.

In accordance with a fourth aspect of the present invention, we provide a method of performing a binding assay using magnetic particle detector system comprising a plurality of reaction surfaces; a corresponding plurality of electrical coils, each located adjacent a respective reaction surface; and a measuring system for measuring the effect of magnetic particles bound to a reaction surface on the inductance of the associated electrical coil, the output of the measuring system being indicative of the quantity of magnetic particles bound to the reaction sites, the method comprising providing different binding partners at the reaction sites; supplying a sample to the reaction vessel or test strip; supplying coated magnetic particles which attach to the binding partners whereby the magnetic particles are caused to attach to the reaction sites and whereby, in the presence of the target analytes in the sample, the magnetic particles are caused to detach from the reaction sites due to preferential binding for the target analytes; and monitoring the affect of magnetic particles bound to the reaction surfaces on the inductance of the corresponding coils to detect separately the quantity of magnetic particles attached to each reaction site, wherein the measuring system comprises a plurality of variable capacitors, each capacitor being connected to a respective electrical coil to define a resonant circuit; an oscillator common to all the resonant circuits; a plurality of phase detectors for detecting the phase differences between the signal from the oscillator and corresponding resonant circuit frequencies and generating a corresponding output signal; a switch to which the output signals are fed and being actuable selectively to supply the output signals to a monitoring system; and a controller for controlling the switch and adjusting the capacitors in response to the output signals from the phase detectors.

In accordance with a fifth aspect of the present invention, we provide a method of performing a binding assay using magnetic particle detector system comprising a plurality of reaction surfaces; a corresponding plurality of electrical coils, each located adjacent a respective reaction surface; and a measuring system for measuring the effect of magnetic particles bound to a reaction surface on the inductance of the associated electrical coil, the output of the measuring system being indicative of the quantity of magnetic particles bound to the reaction sites, the method comprising providing different binding partners at the reaction sites; supplying a sample to the reaction vessel or test strip, the sample including at least one target analyte which is complementary to the binding partners at one of the reaction sites; supplying at least one competitor to which magnetic particles are attached, the or each competitor being complementary to the binding partners at one of the reaction sites, whereby the or each target analyte inhibits the binding of its respective competitor and attached magnetic particles to the respective reaction site; and monitoring the effect of magnetic particles bound to the reaction sites via the or each competitor on the inductance of the corresponding coils to detect separately the quantity of magnetic particles attached to each reaction site, wherein the measuring system comprises a plurality of variable capacitors, each capacitor being connected to a respective electrical coil to define a respective test resonant circuit; a plurality of phase locked loops (PLL), each phase locked loop being connected to a respective test resonant circuit to cause the circuit to resonate, and to a respective mixer circuit; a reference resonant circuit and a reference PLL for causing the reference resonant circuit to resonate; each mixer circuit mixing, in use, the resonant frequency of the reference resonant circuit with the resonant frequency of the corresponding test resonant circuit to produce a beat frequency; and a switch to which the beat frequencies are supplied so as to be selectively connected to the measuring system; the measuring system including a controller for adjusting the variable capacitors and the switch.

In accordance with a sixth aspect of the present invention, we provide a method of performing a binding assay using magnetic particle detector system comprising a plurality of reaction surfaces; a corresponding plurality of electrical coils, each located adjacent a respective reaction surface; and a measuring system for measuring the effect of magnetic particles bound to a reaction surface on the inductance of the associated electrical coil, the output of the measuring system being indicative of the quantity of magnetic particles bound to the reaction sites, the method comprising providing different binding partners at the reaction sites; supplying a sample to the reaction vessel or test strip, the sample including at least one target analyte which is complementary to the binding partners at one of the reaction sites; supplying at least one competitor to which magnetic particles are attached, the or each competitor being complementary to the binding partners at one of the reaction sites, whereby the or each target analyte inhibits the binding of its respective competitor and attached magnetic particles to the respective reaction site; and monitoring the effect of magnetic particles bound to the reaction sites via the or each competitor on the inductance of the corresponding coils to detect separately the quantity of magnetic particles attached to each reaction site, wherein the measuring system comprises a plurality of variable capacitors, each capacitor being connected to a respective electrical coil to define a resonant circuit; an oscillator common to all the resonant circuits; a plurality of phase detectors for detecting the phase differences between the signal from the oscillator and corresponding resonant circuit frequencies and generating a corresponding output signal; a switch to which the output signals are fed and being actuable selectively to supply the output signals to a monitoring system; and a controller for controlling the switch and adjusting the capacitors in response to the output signals from the phase detectors.

In accordance with a seventh aspect of the present invention, we provide a method of performing a binding assay using magnetic particle detector system comprising a plurality of reaction surfaces; a corresponding plurality of electrical coils, each located adjacent a respective reaction surface; and a measuring system for measuring the effect of magnetic particles bound to a reaction surface on the inductance of the associated electrical coil, the output of the measuring system being indicative of the quantity of magnetic particles bound to the reaction sites, the method comprising providing different competitors at the reaction sites; supplying a sample to the reaction vessel or test strip, the sample including at least one target analyte; supplying coated magnetic particles which are provided with binding partners which are complementary to at least one target analyte and to its respective competitor, whereby the or each target analyte inhibits the binding of the magnetic particles to the respective reaction site via its respective competitor; and monitoring the effect of magnetic particles bound to the reaction sites via the or each competitor on the inductance of the corresponding coils to detect separately the quantity of magnetic particles attached to each reaction site, wherein the measuring system comprises a plurality of variable capacitors, each capacitor being connected to a respective electrical coil to define a respective test resonant circuit; a plurality of phase locked loops (PLL), each phase locked loop being connected to a respective test resonant circuit to cause the circuit to resonate, and to a respective mixer circuit; a reference resonant circuit and a reference PLL for causing the reference resonant circuit to resonate; each mixer circuit mixing, in use, the resonant frequency of the reference resonant circuit with the resonant frequency of the corresponding test resonant circuit to produce a beat frequency; and a switch to which the beat frequencies are supplied so as to be selectively connected to the measuring system; the measuring system including a controller for adjusting the variable capacitors and the switch.

In accordance with an eighth aspect of the present invention, we provide a method of performing a binding assay using magnetic particle detector system comprising a plurality of reaction surfaces; a corresponding plurality of electrical coils, each located adjacent a respective reaction surface; and a measuring system for measuring the effect of magnetic particles bound to a reaction surface on the inductance of the associated electrical coil, the output of the measuring system being indicative of the quantity of magnetic particles bound to the reaction sites, the method comprising providing different competitors at the reaction sites; supplying a sample to the reaction vessel or test strip, the sample including at least one target analyte; supplying coated magnetic particles which are provided with binding partners which are complementary to at least one target analyte and to its respective competitor, whereby the or each target analyte inhibits the binding of the magnetic particles to the respective reaction site via its respective competitor; and monitoring the effect of magnetic particles bound to the reaction sites via the or each competitor on the inductance of the corresponding coils to detect separately the quantity of magnetic particles attached to each reaction site, wherein the measuring system comprises a plurality of variable capacitors, each capacitor being connected to a respective electrical coil to define a resonant circuit; an oscillator common to all the resonant circuits; a plurality of phase detectors for detecting the phase differences between the signal from the oscillator and corresponding resonant circuit frequencies and generating a corresponding output signal; a switch to which the output signals are fed and being actuable selectively to supply the output signals to a monitoring system; and a controller for controlling the switch and adjusting the capacitors in response to the output signals from the phase detectors.

The magnetic particles may each be provided with a single binding partner which binds to only one of the competitors (and hence reaction sites). More than one such "type" of coated magnetic particle may be supplied, for instance, one "type" adapted to bind to each competitor. Alternatively, the coated magnetic particles may be provided with more than one binding partner or a species which enable binding to several (or all) of the different competitors.

We have developed a multi-analyte method which is able simultaneously to detect more than one analyte within a sample by providing a plurality of corresponding reaction surfaces and associated electrical coils.

We have found that it is possible to design coils which respond to magnetic particles close to the coil but not to particles that are located away from the relevant reaction surface. Thus, unreacted particles that are still in suspension in the reaction solution do not influence measurements of the bound particles and they do not have to be removed before measurements are made.

The reaction surfaces could be defined by distinct structures or by different regions of a single reaction surface.

The sample can comprise any biological or chemical (including non-biological) substances.

In some examples, the sample comprises one of whole blood, plasma, serum and urine. Assays can be performed to detect environmental analytes such as toxins or pollutants in a range of samples such as water samples from rivers, reservoirs, lakes, sewage outlets, farm run-offs, soil extracts and plant extracts.

Some examples of magnetic particle detector systems and their use in binding assays will now be described with reference to the accompanying drawings, in which:-

Figure 1 illustrates an arrangement of five coils;
Figures 2a, 2b and 2c illustrate three examples of a phase locked loop circuit;
Figure 3 illustrates a typical response of a magnetometer to the presence of magnetic particles;
Figure 4 illustrates a comparative example of a system;
Figure 5 illustrates a first example of a system for use in a method according to the invention;
Figure 6 illustrates a second example of a system for use in a method according to the invention;
Figure 7 is a schematic cross-section through an example of a system for use in a method according to the invention;
Figure 7a depicts an example of a printed circuit board suitable for use in the systems illustrated in Figures 4 to 7;
Figure 8 illustrates the system of Figure 7 in conjunction with an electromagnet;
Figure 9 illustrates a sandwich assay schematically;
Figure 10 illustrates a typical response from a sensing coil when a sample is added to the reaction vessel;
Figure 11 illustrates two dose response curves measured simultaneously using a dual coil substrate;
Figure 12 is a typical recording taken with the application of a steady (non-pulsed) magnetic field;
Figure 13 illustrates a dose-response curve for CRP;
Figure 14 illustrates the theoretical decrease in relative intensity of magnetic field with distance from the coil; and,
Figure 15 is a schematic diagram illustrating how bound magnetic particles produce a stronger signal than unbound particles.

Magnetic particle detector systems according to the invention comprise three key elements namely the resonant coils, the measuring system or detector circuit, and the test strip or test/reaction vessel. These will be described in turn.

## 1. Resonant Coils

A variety of coil designs including helical, conical or flat-plate spiral can be used. Typically, a flat-plate spiral design is used because the electromagnetic field distribution is concentrated close to the surface of the coil so that when the coil is placed adjacent to the reaction surface(s) the electromagnetic field does not penetrate far beyond the reaction surface(s). The coils can be either a single layer flat coil or a multi-layer flat coil. Preferably the coils will be deposited onto a substrate made from an electrically insulating material. Suitable substrate materials include, a polymer, an amorphous material (such as glass, ceramic, etc), a semiconductor (such as silicon, germanium, gallium arsenide, etc), a crystalline material (such as mica, graphite, diamond, etc), or a composite (such as glass or carbon fibre board etc).

The substrate material may be flexible or rigid. In a preferred embodiment the substrate material is ceramic. The coils can be fabricated from any conducting or semiconducting material or mixtures of materials. Examples would be obvious to an expert. In a preferred embodiment gold is used as the major element in the coil fabrication. In an alternative embodiment doped silicon is used as the coil material. The coils can be deposited by a variety of means e.g. electroplating, vacuum deposition, sputtering, screen printing, ion implantation, diffusion or other well-established techniques. In one preferred embodiment thick film printing technology is used. This technique provides a low cost technique for film deposition. Typically, gold ink (Agmet ESL part no. 8880-H) is used as the coil material. The diameter of the coils can vary from sub-micrometre sized coils to more than 1cm depending on the technology used and the application. The number of turns on the coil determines the inductance of the coil and is chosen to be compatible with the detector circuitry.

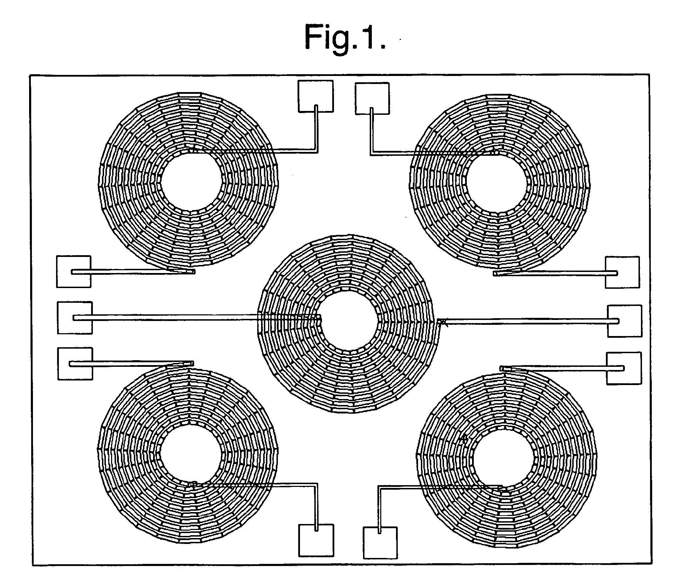

In a multi-analyte system there is a different binding and affinity partner for each analyte on a reaction surface. Several coils are used for measurement of a number of analytes. The arrangement of the coils is such that at least one can be positioned close to each reaction surface. In a preferred embodiment, five coils are arranged on a square substrate. The arrangement is illustrated in Figure 1. In this figure, each coil has five turns and the track width is $100\mu m$ with $75\mu m$ spacing. The thickness of the track is $8\mu m$. The inner radius of the coil is $500\mu m$. In this example the coils are of identical design, but this is not necessarily the case. During operation the coils on the substrate are arranged relative to the reaction surface, such that the electromagnetic field associated with each coil covers all or a portion of the reaction surface. In some cases, the coils could be on a support separate from a surface defining the reaction surface and brought adjacent the reaction surface.

Typically, at least one of the coils will be selected as a reference coil. In a preferred embodiment, the reaction surface corresponding to the reference coil is identical to the other surfaces in most respects except that it contains no capture molecules, in which case no magnetic particles can be captured and they might, or might not, contain a predetermined number of magnetic particles. In a further embodiment, the reaction surface or surfaces contains capture molecules of a certain type so that a predetermined number of magnetic particles always binds regardless of the concentration of the analyte. The resonant frequency of the reference coil(s) can then be compared with the resonant frequencies of the test coils. This has the benefit of reducing errors in readings caused by factors such as noise, interference and temperature variations.

## 2. The detector circuit

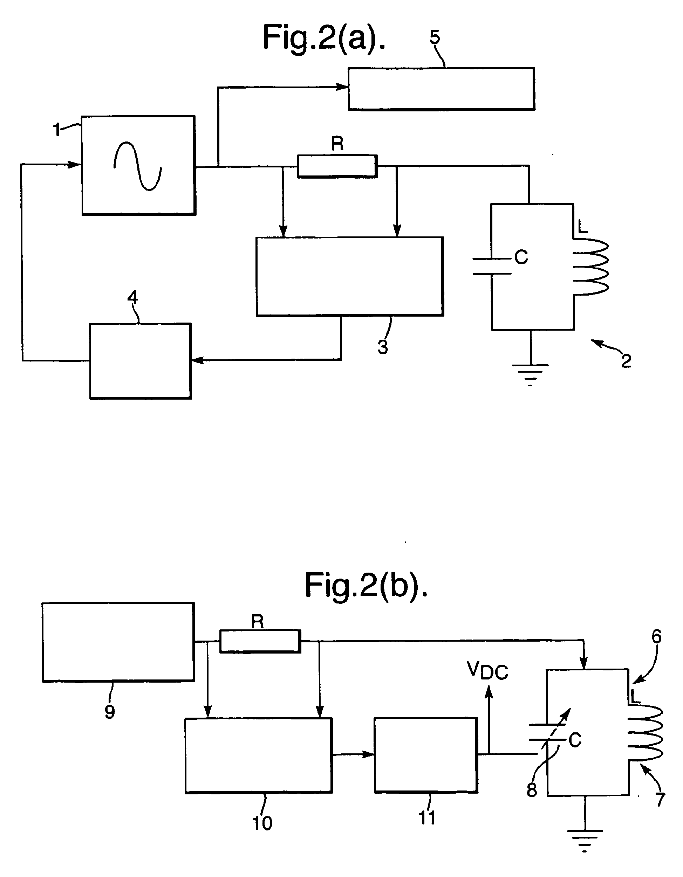

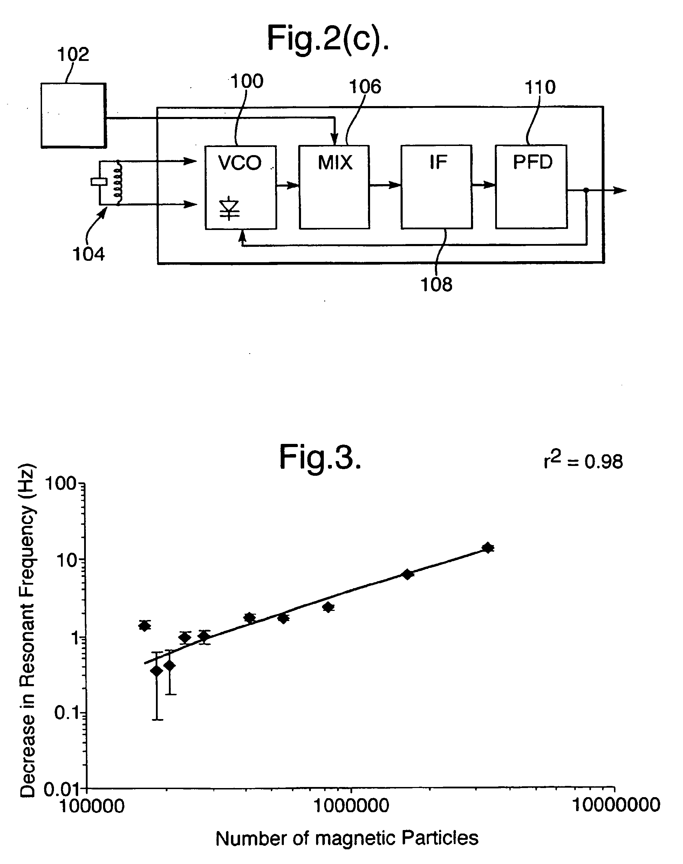

The coils are connected in parallel or in series with one or more capacitors to form a LC resonant network. The capacitor values are chosen in order to create circuits that resonate at frequencies compatible with the measurement circuit. Resonant frequency measurements can be carried out using the LC network to control the output frequency of an oscillator such as a Colpitts, Hartley or Armstrong oscillator. In a preferred embodiment, a phase lock loop (PLL) circuit is used to determine the resonant frequency of the LC network. In an example of a PLL (Figure 2a), the detector circuitry comprises five main stages. These are a voltage controlled sine-wave oscillator (VCO) 1, a LC network 2 including the coil L and a capacitor C, a phase detector 3 and a loop filter network 4. This operates as follows. The VCO 1 drives the LC network 2. The initial frequency of the VCO 1 should closely match the resonant frequency of the LC network 2. When the frequency of the VCO is identical to that of the resonant frequency of the network, there is a zero phase difference across the resistor R. If the VCO frequency drifts from the resonant point then the phase detector 3 senses a phase difference across the resistor R and produces an error signal. The error signal is filtered and supplied to the VCO 1. This changes the oscillator frequency to again match the resonant circuit. Thus a stable resonant circuit is provided. The inductance of the resonant coil L changes when magnetic particles are immobilised on the reaction surface close to the coil. The change is dependent on the quantity of particles present. This inductance change results in a variation in the resonant frequency of the LC network 2. Consequently, as the VCO 1 and the resonant circuit frequencies are no longer identical, a phase difference is detected across the resistor R and an error voltage is supplied to the VCO to alter the output frequency appropriately. The new stable frequency produced by the VCO is the resonant frequency of the network with magnetic particles close to the coil. A typical plot of the number of magnetic particles versus decrease in resonant frequency as detected by a meter 5, is shown in Figure 3.

In another example of the phase-locked loop circuit (Figure 2(b)), the resonant frequency of a LC network 6 incorporating the coil 7 and a variable capacitor 8 is locked onto the output frequency of a very stable sine wave oscillator 9 (such a temperature regulated crystal-controlled oscillator). The output from the oscillator 9 is fed to the LC network 6 via a resistor R as before. The values of L and C are chosen so that the resonant frequency of the LC network is close to the output frequency of the oscillator, but in this case, C is a variable voltage-controlled capacitor (varicap or varactor) 8. A phase detector circuit (PSD) 10 senses the phase of the signal across R and, as before, produces a dc-error signal, which in this case is fed via a loop filter 11 to the varactor 8. The error signal adjusts the value of C until the resonant frequency of the LC network matches exactly the output frequency of the stable oscillator. A sample containing magnetic particles brought near to coil causes the inductance of the coil to increase and the PSD circuit 10 responds by changing the error signal so that resonant frequency of the LC network again matches that of the oscillator. The magnitude of the error signal $V_{DC}$ is related to the number of magnetic particles in the sample and is monitored by a meter (not shown).

In a simple approach, each coil can be connected to a respective circuit of the type shown in Figure 2a or Figure 2b. The simplest way of achieving this is to use individual phase-locked circuit for each coil and a common controller or monitoring system to read the output frequency of each PLL circuit via a programmable switch. Whilst this arrangement will allow rapid measurements, it uses a lot of components and is likely to be expensive.

The arrangement shown in Figure 2c locks a VCO 100 to a crystal reference signal 102. A PMP sample is applied to the low Q sense coil 104. The inductance of the sense coil, which is the tuned element of the Local Oscillator (VCO) is mixed at 106 with the crystal oscillator RF signal to produce a change in the Intermediate Frequency 108. This change is phase detected (PFD) 110 to give a DC error and applied as an automatic control signal to the VCO sense tuned circuit variable capacitance diodes. This re-adjusts the resonance of the tuned sense circuit and keeps it locked to the reference signal. The DC error voltage in milli and micro volts is the measure of the sample.

**Preferred circuits to be used in multi-coil, multi-analyte systems**

In this section, we describe various circuit arrangements we have actually used for multi-coil measurements and describe other possible circuit arrangements. The controller mentioned in all these circuits could be dedicated hardware, such as a group of logic circuits, a microprocessor or a personal computer.

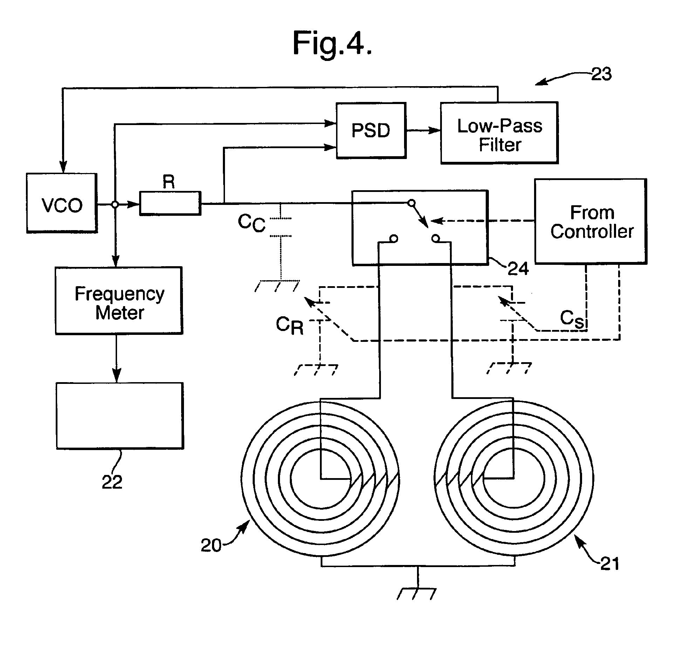

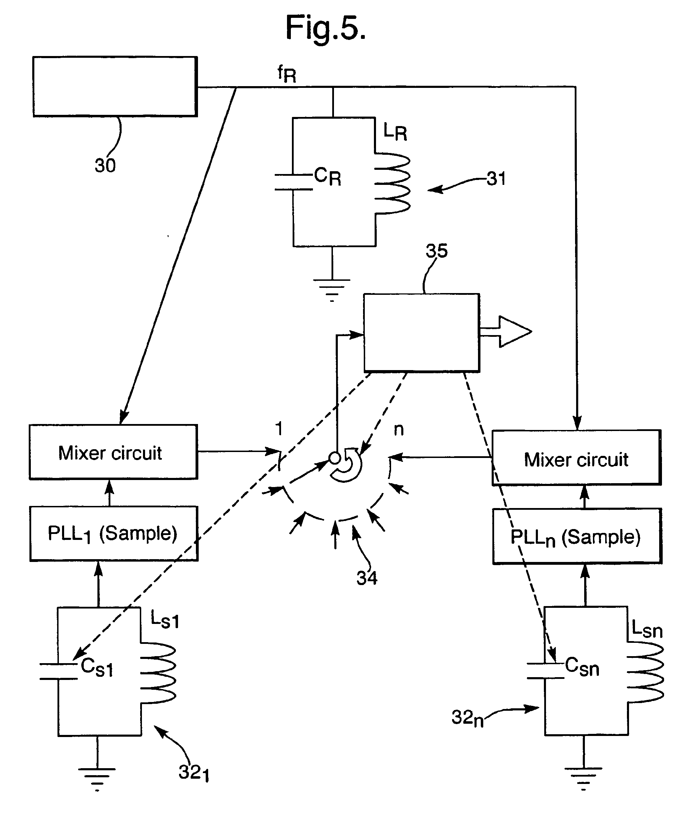

In a comparative example of the application of the magnetometer in a multi-coil system having a reference coil associated with a reference reaction site and a test coil associated with a test reaction site, one phase locked loop circuit 25 is used to measure the resonant frequencies of the reference LC network and the test LC networks in sequence using a programmable radio-frequency switch 24 (Figure 4). In one arrangement, individual varactors $C_R, C_S$ could be used with each coil 20,21 to provide resonant circuits and each capacitor ($C_S$ and $C_R$) then adjusted by a common controller 22 so that immediately before adding the test sample, the resonant frequency of each LC network is identical. Alternatively, each coil 20,21 could be trimmed during manufacture to have identical electrical characteristics and then a single common capacitor ($C_C$) connected to the pole of the switch 24 would form a resonant circuit with a particular coil when the switch has selected that coil: in this way, the resonant frequency of each coil would be identical prior to adding the test sample. For clarity, only two coils are shown in Figure 4, although in practice any number of coils could be connected via the switch 24 to the PLL circuit 25. The controller 22 moves the switch 24 sequentially from one LC network to the next and the resonant frequency of each is measured and stored by the controller. A disadvantage experienced with the circuit shown in Figure 4 is that the PLL circuit can take a long time to settle down after the switch has moved to a new position, which means that data are not collected fast enough to give the reliable kinetic readings using the technique described in the last section. An embodiment that reduces this problem is shown in Figure 5.

In Figure 5, one of the coils $L_R$ and one of the capacitors $C_R$ are used as a reference circuit 31. A PLL circuit 30 measures the resonant reference frequency ($f_R$) of the $L_R C_R$ circuit 31. The test coils ($L_{S1}$ to $L_{Sn}$) are connected in parallel with respective varactor capacitors ($C_{S1}$ to $C_{Sn}$) and the resonant frequency of each LC circuit $32_1...32_n$ determined by individual PLL circuits ($PLL_1$ to $PLL_n$). The resonant frequency of $L_{S1} C_{S1}$ at the output of $PLL_1$ is fed into a mixer circuit $33_1$. The reference frequency $f_R$ is also fed into the mixer circuit $33_1$ which produces a beat frequency that is equal to the difference in the resonant frequency of $L_{S1} C_{S1}$ network $32_1$ and $f_R$. A similar arrangement of PPL and mixers $33_2...33_n$ circuits is associated with each of the other test LC circuits. The output of each mixer circuit is connected via a programmable switch 34 to a controller 35, which could be dedicated hardware or a personal computer. Before the test sample containing n analytes is added, the controller 35 adjusts the values of $C_1$ to $C_n$ until there is zero beat frequency from each mixer circuit $33_1...33_n$. When the test sample has been added and the reactions proceed on the individual reaction surfaces for the analytes, the resonant frequencies of the associated LC circuits decrease, producing beat frequencies in the separate mixer circuits, which are read by the controller 35. An advantage of this circuit is that it is much faster than the one shown in Figure 4. A disadvantage is that it uses a lot of electronic components.

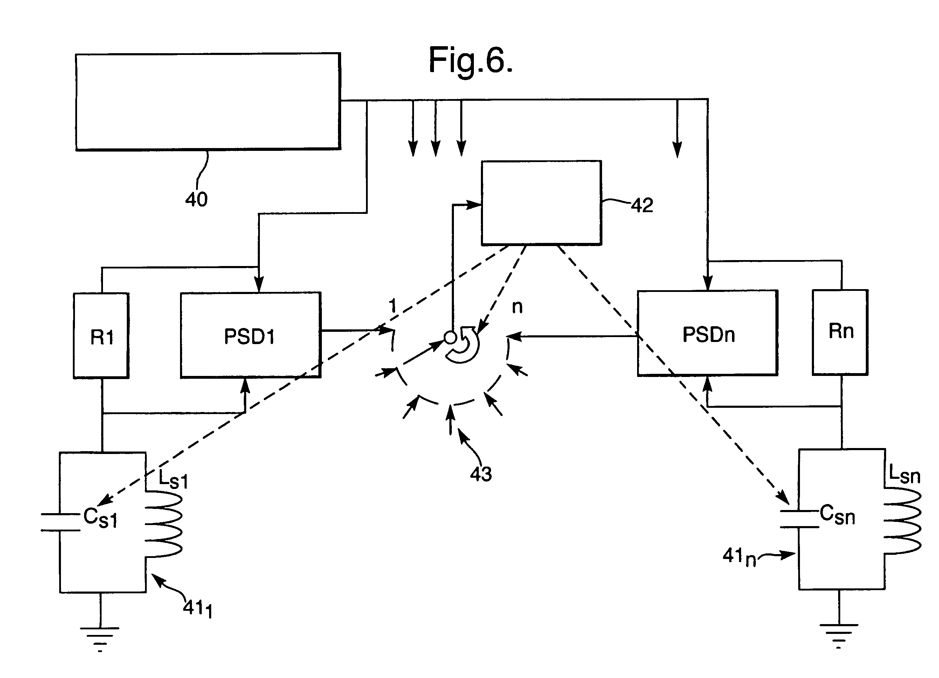

A potential problem when using substrates containing many closely-spaced coils is that crosstalk could occur between the coils, leading to faulty operation of the phase detectors. One way of reducing this potential problem is to operate each coil at widely differing frequencies so that pickup by one coil of the electromagnetic radiation from another can be easily filtered out. An alternative approach is to ensure that each coil runs at exactly the same frequency. Figure 6 shows such an arrangement. A crystal-controlled oscillator 40 produces a high-purity sine wave of a fixed, stable, frequency. The oscillator could also be temperature controlled to give greater stability. This waveform is fed to all n of the LC resonant circuits $41_1...41_n$ on the sensing device via suitable feed resistors R1 to Rn as shown. The values of L and C are chosen so that the resonant frequency of each LC network is close to the fixed frequency of the crystal-controlled oscillator 40. Each LC network $41_1...41_n$ has a phase-sensitive detector (PSD1 to PSDn) connected across the feed resistors. The output of each PSD is filtered and then connected via a programmable switch 43 to a controller 42. The output of each PSD is a dc voltage that is read in turn by the controller 42 which also provides a measuring system. Before samples are added to the reaction vessel, the controller 42 starts by selecting the output from PSD1 and then adjusts $C_{S1}$, which is a varactor, until the output voltage from PSD1 is 0: at this point there is no difference in phase in the sinusoidal waveform across R1 and the resonant frequency of the $L_{S1}C_{S1}$ network exactly matches the frequency of the sine-wave from the crystal-controlled oscillator. The controller 42 now moves to each position of the switch 43 in turn and repeats the process for each LC network until the resonant frequency of all the LC networks exactly matches the output frequency of the crystal-controlled oscillator. At least one of the coils can be a reference coil. When a sample containing n analytes is added to the reaction vessel, magnetic particles become immobilised on the relevant reaction surfaces next to the coils depending on the nature of the assay, and the resonant frequencies of the associated LC networks change accordingly. This causes the outputs of the associated PSDs to change from 0 with magnitudes that are directly related to the concentrations of the magnetic particles bound to the associated reaction layers, which in turn are related to the concentrations of the analytes. The controller 42 reads these signals sequentially via the programmable switch 43. An advantage of this circuit is that fewer components are used compared with the other circuits.

### 3. Test strip or test vessel

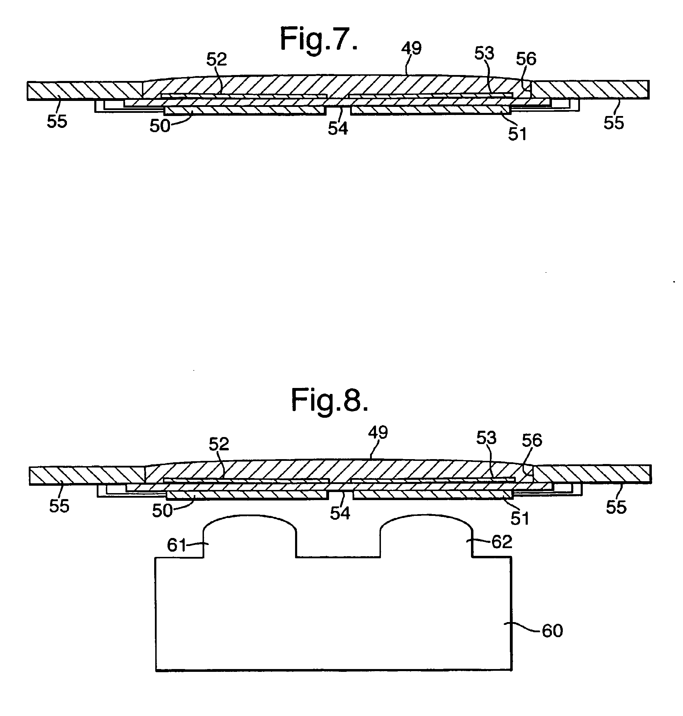

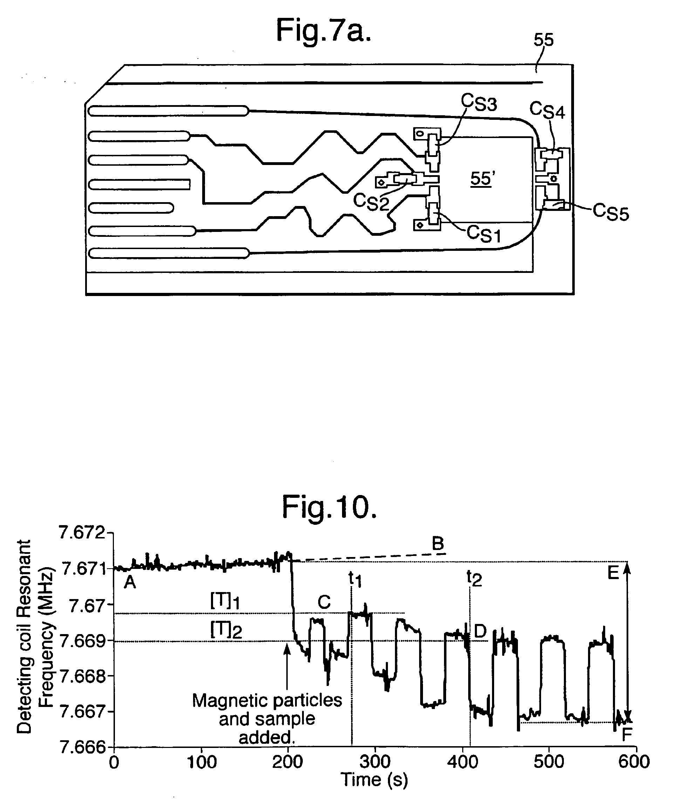

Binding reactions between binding partners where one partner is the analyte in the sample and the other partner is the capture molecule immobilised on the reaction surface take place on a substrate in a test vessel or on a test strip. The immobilised binding partners on the reaction surface will depend on the nature of the analysis and could be a multi-layer arrangement containing linker molecules to fix the capture molecules to a substrate material and blocking molecules to reduce non-specific binding. At the end of the analysis, the number of magnetic particles immobilised on a suitable reaction surface is related to the concentration of the analyte. Suitable substrate materials could be a ceramic, polymer, amorphous material (such as glass), a semiconductor (such as silicon, germanium, gallium arsenide, etc.), a crystalline material (such as mica, sapphire, diamond, etc.), or a composite (such as glass or carbon fibre board etc.) depending on the nature of the immobilised binding partner in the reaction surface. Typically the substrate material will be thin (for example 1mm). In a multi-analyte system, the reaction surfaces for each analyte may be in separate defined areas on the substrate. In a preferred embodiment, the substrate also forms a base or other wall of the test vessel 49. During operation, each sensing coil must be close to its respective analyte reaction surface. In one embodiment (Figure 7), the coils 50,51... are mounted outside the reaction vessel 49 but positioned close to their respective analyte reaction layers 52,53, which are attached to the substrate 54 forming the wall of the reaction vessel and are inside the vessel. In this embodiment, the substrate for the coils and the substrate for the reaction surface(s) may be made from different materials. In a preferred embodiment, the reaction surfaces and the coils are both mounted on the same, thin substrate. In one version of this preferred embodiment, the reaction surfaces are deposited in defined areas on one side of the substrate and the coils 50,51 are formed on the other side directly opposite their respective reaction surfaces (Figure 7). In an alternative version of the preferred embodiment, the coils are first deposited on the substrate, covered with a thin insulating layer and then coated with a thin layer of their respective reaction surfaces.

The dimensions of the test vessel will be dependent on the volume of the sample and size of the reaction surfaces. In one example (Figure 7), the reaction surfaces are coated on one side of a substrate with the coils on the other side. The substrate 54 also forms the base of the test vessel. A typical size for this substrate would be 9mm by 9mm. The walls of the vessel are formed from a hole cut in a sheet of printed circuit board (PCB) 55: any insulating material, such as glass, mica or ceramic, is also effective for this purpose. The depth of the well is determined by the thickness of the PCB and this is typically 1 mm. In this example, the coils are deposited on the external side of the substrate. Connections between the coils and the detector circuit can be made by a variety of means including wire bonding, W strip or mechanical clips. In the arrangement shown in Figure 7 the PCB not only acts as the walls of the vessel but also as a connector as tracks are etched onto the board.

Capacitors and other components from the detection circuit can be mounted on the substrate 54 and/or the PCB 55. An example of a PCB layout is shown in Figure 7a. In this example, the walls of the reaction vessel are formed by a square hole 55' in the PCB 55. Typically, hole 55' is about 9mm by 9mm in size. A number of precautions could be taken to reduce effects that cause variations in the impedance value of the each of the resonant circuits. The tuning capacitors $C_{s1} ... C_{sn}$ (<5% tolerance) could be positioned as close as possible to each coil on the edge of the hole 55'. The track lengths could be equalised whilst minimising crosstalk by producing tracks having "meandering" paths. Further, all the leads on the PC (including those connecting the PCB to the controller 35 and those connecting the capacitors $C_{s1} ... C_{sn}$ to the coils) could also be designed in order to match the lengths of the tracks to one another as closely as possible. All the earth connections of the coils could be linked in a star arrangement on the underlying substrate.

Typical PCB dimensions may be about 50mm by 24mm, the hole 55' being centred across the width of the PCB 55 adjacent one end of the PCB 55.

In another embodiment, a test vessel is formed by creating a well in a sheet of material and the coils are deposited on or fabricated in one, or more, of the sides of the vessel. In a further embodiment, coils are formed on a flexible substrate material, such as a polymer. Using integrated or thick film circuit techniques, it is possible to incorporate some, or all, of the components such as the capacitors, phase-locked loop circuits, programmable switches and mixer circuits into a single device that could be fixed to the substrate along with the coils. Components could then be trimmed in the manufacturing stage and variations in coil, and other component characteristics minimised. This would improve consistency and repeatability between different coil devices and lead to a more compact, portable device.

A temperature-controlled heater could also be incorporated on the substrate by depositing a metal film onto the substrate. A heater may be necessary in field applications when the ambient temperature is so low that it affects the chemical reactions in the vessel and, or, produces such large temperature drift in the values of the components on the substrate that they are outside their calibration range.

**The Application of External Magnetic Fields to Accelerate Reactions**

An advantage of magneto-immunoassays over immunoassay methods using different labels is that washing steps are not necessary because there are no significant magnetic materials in a typical sample that will interfere with the measurements. In clinical use, samples of whole blood, plasma, serum, urine, etc. may be used without further preparation. In environmental monitoring, samples taken from rivers, lakes, etc. that might be contaminated with magnetic materials can be easily cleaned prior to analysis by simply applying an external magnetic field to remove any interfering magnetic materials.

We have also found that applying an external magnetic field using permanent magnets or electromagnets can considerably reduce the total time for an assay. Figure 8 shows a typical arrangement using the multi-coil reaction vessel described earlier and an electromagnet 60.

Pulsed magnetic fields were used in the earlier experiments, and these were produced by applying a pulsed current to an electromagnet. An intense, localised, magnetic field with a steep field gradient is obtained by placing iron or steel studs 61,62 on the electromagnet and positioning then directly below each sensing coil 50,51 so that the magnetic particles are pulled towards the centre of the coils. Instead of using separate metal studs, the pole pieces of the electromagnet could be shaped accordingly.

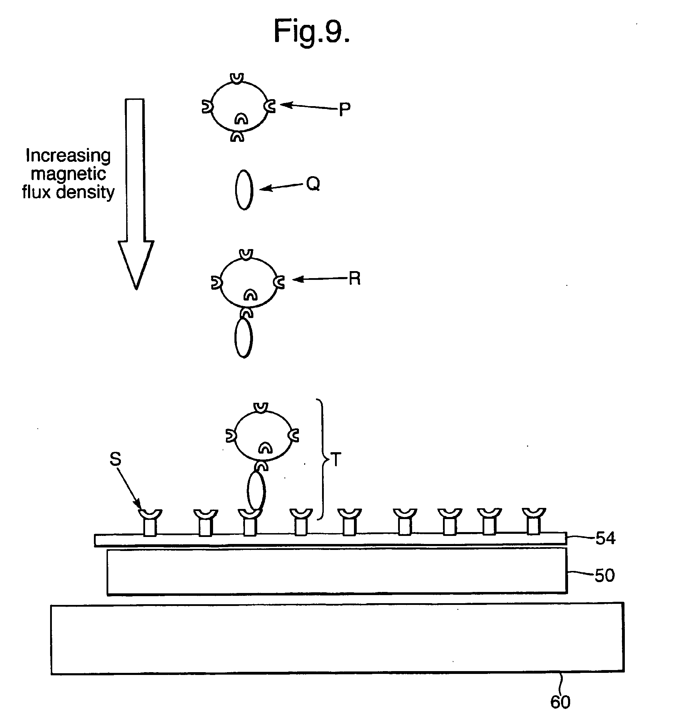

Figure 9 shows schematically what happens when the external magnetic field pulls a coated magnetic particle, P through the test solution containing the analyte Q towards an immobilised capture molecule, S. The capture molecules on P bind to Q to form a complex, R.

$$\ce{P + Q <=>[K_1][K_2] R}$$

$K_1$ and $K_2$ are the rate constants as shown. If there is strong affinity between the coated magnetic particle and the analyte molecules, then $K_2$ may be ignored. The reaction between P and Q is likely to be rapid and if the test solution containing Q is premixed with a solution containing P before the magnetic field is switched on, then the resultant solution will contain mainly the complex R. When the magnetic field is switched on, the complex R is attracted to the immobilized capture molecules, S, and a sandwich complex, T, forms with the magnetic particle immobilised in the reaction surface on the substrate.

$$\ce{R + S <=>[K_3][K_4] T}$$

Where, $K_3$ and $K_4$ are the rate constants. Again if there is a strong affinity between the analyte molecule and the immobilised capture molecule in the reaction surface, then $K_4$ may be ignored. The build up of the sandwich complex $[T]_t$ on the substrate with time, t, should follow a first order reaction:

$$[T]_t = [Q](1 - \exp\{- K_3 \times t\}) \qquad (1)$$

Thus,    $\dfrac{d [T]_t}{dt} = [Q] \times K_3 \exp\{- K_3 \times t\}$

and $\quad \underline{d}$ [T]$_t$ is a maximum when exp{- $K_3 \times$ t} = 1,
$\quad$ dt
$\qquad$ i.e. when t = 0.

The signal recorded by the sensing coil is inversely related to [T]$_t$; so the rate of fall in resonant frequency of the sensing coil just after the test sample is added to the reaction mixture is a maximum and directly related to the initial concentration [Q] of the analyte molecules.

In practice, it is often difficult to determine the initial fall in resonant frequency because of mixing effects when the different reagent and test solutions are first added. An alternative method is to wait for a certain period, $t_1$, after adding the solutions when the reactions have settled down and then to measure the gradient of the rate of fall in the resonant frequency over the time period, $t_2 - t_1$.

Expanding equation (1) as a power series:

$$[T]_t = [Q](1 - \{1 - (K_3 \times t) + ....\})$$

ignoring higher terms as $K_3 \ll 1$

$$[T]_t = [Q] \times K_3 \times t$$

Suppose, when t = $t_1$, [T]$_t$ = [T]$_1$ and when t = $t_2$, [T]$_t$ = [T]$_2$
Then,

$$\frac{[T]_2 - [T]_1}{(t_2 - t_1)} = [Q] \times K_3$$

Again, as the signal recorded by the sensing coil is inversely related to [T], the gradient of the decrease in resonant frequency over the time interval ($t_1 - t_2$) is directly related to the initial concentration of the analyte, [Q] . Figure 10 shows a typical response from the detection coil when a test sample is analysed using the reaction vessel shown in Figure 8. Before the sample and magnetic particles are added to the reaction vessel, the resonant frequency of the detection coil drifts with temperature changes in the environment (line AB). Solutions containing the analyte, Q, and an excess of the coated magnetic particles, P, are mixed together and the mixture added to the reaction vessel: reactions between P and Q commence and the complex R is formed. A pulsed current is now passed through the electromagnet. During the periods when the current is on, the magnet particles are pulled towards the reaction surface. Reactions occur between the magnetic particles, analyte and the capture molecules, S, resulting in the complex, T and immobilisation of the particles and producing a decrease in the resonant frequency of the sensing coil. During the period when the current is off, unbound complexes, R, and unbound particles, P, are free to move away from the reaction surface, resulting in a slight increase in the resonant frequency: particles, P, may now react with remaining un-reacted analyte molecules, Q, and complexes R may re-orientate so that they are more favourably aligned to react with the capture layer S. When the current again passes through the electromagnet, the unbound magnetic particles are pulled to the reaction surface and further reactions take place. The process continues until all of the analyte molecules have been captured in the complex T or all of the available capture molecules S have been used up (point F on Figure 10) . The decrease in frequency EF is thus related to the concentration of the analyte.

However as explained earlier, the rate at which the resonant frequency of the coil falls over a particular time period after adding the sample is related to the concentration of the analyte and this is determined by measuring the gradient of line CD. This gradient can be determined in just 3 or 4 cycles of the electromagnet, which is considerably shorter than in previous methods. If this measurement is repeated with a sample containing a different concentration of the analyte, then the gradient of line CD changes accordingly. In addition, subtracting the gradient of line AB from line CD reduces errors caused by drift in the resonance coil. In multi-coil arrangements, one of the coils could be a reference coil and drift in the resonant frequency of this coil could be used to correct for drift in the others.

**An Example of the Application of the Technique: The Simultaneous Measurement of the Concentrations of troponin I (TnI) and creatine kinase MB (CKMB) in a solution containing a mixture of the two proteins.**

The reaction vessel described in Figure 8 was used. The upper surface of a ceramic square substrate with two sensing coils deposited on the lower surface was prepared by first washing in 6M nitric acid followed by 2M sodium hydroxide and then de-ionised water. The upper surface was then activated by applying polymerised glutaraldehyde for 30 minutes (prepared by adding 500μl of 0.1M sodium hydroxide in 5 ml of 5% glutaraldehyde and neutralized with 500μl of 0.1M hydrochloric acid after 30 minutes at room temperature). Following activation, the surface of the ceramic substrate was washed with methanol for 1 minute. Mouse anti-human TnI or goat anti-human CKMB (Randox Laboratories Ltd., UK) was diluted 1:500 times in 0.1M bicarbonate buffer (pH 9.7) containing 2% methanol and 0.5% glutaraldehyde. Ten μl of the solution containing TnI antibodies was applied to the activated ceramic square as a spot directly above the centre of one coil on the underside and 10 μl of the solution containing the CKMB antibody was applied to the activated surface above the other coil, and allowed to incubate for 4 hours at room temperature. The surface or the chip was then washed in 50 mM phosphate-buffered saline (pH 7.4), (PBS) and blocked with 1% bovine serum albumin in PBS to reduce non-specific binding. Paramagnetic particles were prepared by coating Seradyn protein G coated particles with mouse anti-human TnI antibody or mouse anti-human CKMB antibody (Randox Laboratories Ltd.) and then diluted 1:1000 times in 0.1 M phosphate buffer (pH 8.1). Ten μl of paramagnetic particles were washed 3 times in the phosphate buffer and then mixed with 30 μl of the antibody solution and incubated for 10 minutes at room temperature in a slowly rotating sample mixer (Dynal UK Ltd). The paramagnetic particles were then washed 3 times in phosphate buffer before being re-suspended in 20 nM dimethyl pimelimidate (Sigma-Aldich, UK) and incubated at room temperature with rotational mixing for a further 30 minutes to promote cross linking. The reaction was stopped by suspending the paramagnetic particles 50 mM Tris(hydroxymethyl)aminoethane buffer (pH 7.3). Unoccupied sites on the particles were blocked using 1% bovine serum albumin in PBS. Standards were prepared by diluting stock solutions of human TnI in serum (100 μg/ml, Randox Laboratories Ltd) and human CKMB in serum (10 μg/ml, Randox Laboratories Ltd) in 1% BSA in PBS to give a range of solutions with known concentrations.

The detector coils on the ceramic chip substrate were placed above the steel studs to focus the magnetic field to the centres of the coils allowing paramagnetic particles to be pulled on to the immobilised antibody above the coil. This enables the antigen to cross-link the antibodies on the ceramic surface and the paramagnetic particles more readily and thereby accelerate the immune-reaction as explained above. The resonant frequency of the detector coils were recorded every one second on to a PC for further data analysis.

**Use of a Pulsed External Magnetic Field to Accelerate the Reactions.**

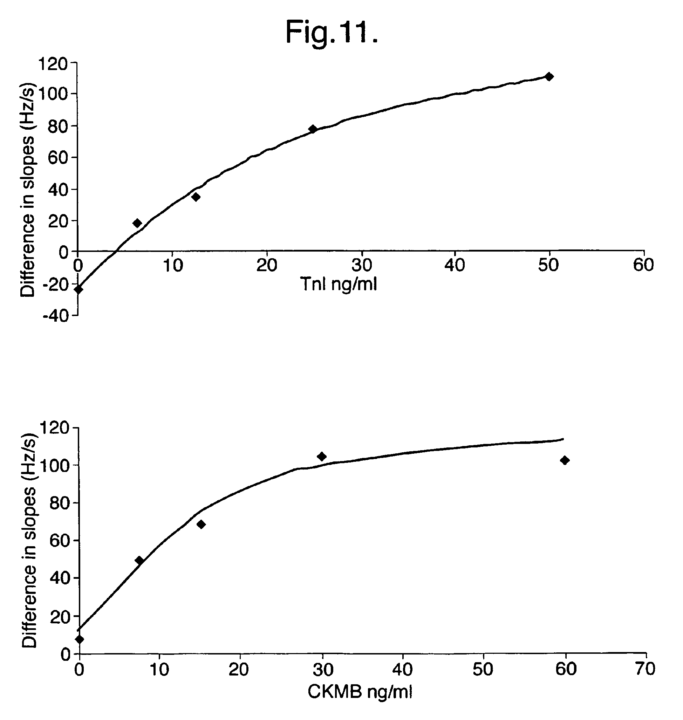

Before the assay, 120 μl phosphate buffered saline was placed into the vessel and recording of the resonant frequency of the sensing coil started. This gave the background drift of the resonant frequencies of the coils. After three minutes 10 μl coated paramagnetic particles (a 1:1 mixture of the different antibody coated magnetic particles was used when 2 analytes were present) and 10 μl of the standard solution was added to the well and the electromagnet that pulled the paramagnetic particles onto the surface was switched on after a further 30 seconds. A symmetrical pulsed waveform with a frequency of approximately 0.05 Hz (approximately 10s on and 10s off) was used to drive the power supply to the electromagnet causing the magnet field to be alternately on and off. When the electromagnet was "on", the paramagnetic particles were pulled on to the reactive surface. During the "off" phase, the unbound paramagnetic particles were free to move in the buffer. Sixty seconds ($t_1$) after adding the particles, the slope of the recorded signal was determined over the next 100 seconds, ($t_2$ - $t_1$). The results were calculated as explained above by plotting the difference in the slope of the recorded signal before the addition of paramagnetic particles and that recorded over the ($t_2$ - $t_1$) period. The experiment was repeated for solutions containing different amounts of TnI and CKMB. The results are plotted in Figure 11 and they clearly show that a single ceramic chip device can determine the concentrations of the two different analytes at the same time. If the ceramic substrate contained 3 coils then the third coil could be used a reference coil and used to monitor the drift in the measurements caused by temperature changes. In our previous method of measuring we used two magnets alternately, one placed below the sensing coil to pull the magnetic particles to the reaction surface and the other positioned above the reaction vessel to pull unbound particles away from the surface. These experiments show that the second magnet or electromagnet positioned above the reaction vessel is not necessary; thus simplifying the construction of the apparatus.

This approach could be extended to solutions containing any number of analytes by depositing the appropriate number of sensing coils on the substrate, applying appropriate capture layers and using suitably coated magnetic particles in the reaction vessel. A ceramic substrate with 5 sensing coils could be used.

**Use of a Non-Pulsed External Magnetic Field To Accelerate the Reactions**

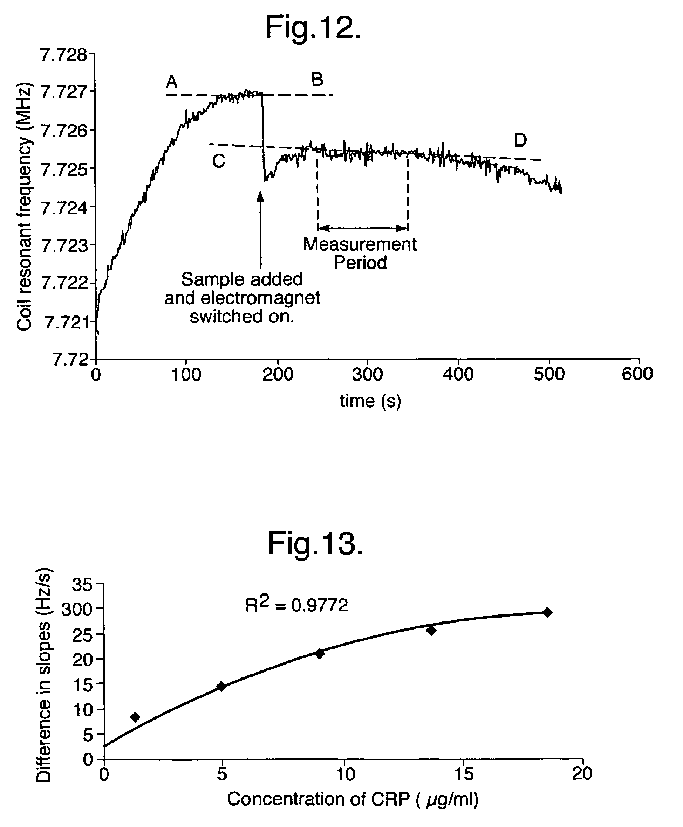

In a further development, we have found that it is not necessary to pulse the magnetic field after the sample is added to the reaction vessel. A static field could be used. The sample procedure was the same as before, and 120 $\mu$l phosphate buffered saline was place into the vessel and recording of the resonant frequency of the sensing coil started. This gave the background drift of the resonant frequencies of the coils. After three minutes, 10 $\mu$l coated magnetic particles and 10 $\mu$l of the standard solution was added to the well and the electromagnet that pulled the paramagnetic particles onto the surface was switched on after a further 30 seconds (Figure 12). This time, a steady, non-pulsed, magnetic field was applied via the studs. Again, 60 seconds ($t_1$) after adding the particles, the slope of the recorded signal was determined over the next 100 seconds, ($t_2 - t_1$). The results were calculated in the same as before by plotting the difference in the slope of the recorded signal before the addition of paramagnetic particles (line AB) and that recorded over the ($t_2 - t_1$) period (line CD). This measurement method produced very similar results to those obtained when a pulsed magnetic field was used (Figure 13). These results were unexpected as it was assumed that it was necessary to switch off the magnetic field for some periods to allow unbound magnetic particles to move away from the reaction surface so that they did not interfere with the readings of the sensing coil. A possible explanation for this is that the magnetic particles bound to the reaction surface as a result of the assay interact much more strongly with the electromagnetic field created by the flat, spiral, sensing coil in the reaction vessel than the magnetic particles that are unbound. This is a result of two factors:

    a. The electromagnetic field produced by the flat spiral coil.
    b. The difference between the magnetic characteristics of the bound and unbound magnetic particles.

A simple calculation shows that the sensing coils produce intense, localised, electromagnetic fields that do not penetrate much beyond the reaction surfaces on the substrate. An approximate value for the variation in the magnetic field $H_z$ along the central axis, $z$, of the coil can be determined by applying Biot-Savart's Law to the coil. For a circular coil with a single turn of radius $a$, the magnetic field produced by the coil carrying a certain current decreases with $z$ by:

$$H_z = ka^2 / (z^2 + a^2)^{1.5}$$

where $k$ is a constant that depends on the current passing through the coil and the magnetic permeability of the medium surrounding the coil. A spiral, coil consisting of m turns may be approximated to $m$ concentric coils with radii, $a_1$, $a_2$, $a_3$... and $a_m$. As the same current passes through each turn of the coil, the total field produced by the spiral coil is:

$$H_z = k \sum a_m^2 / (z^2 + a_m^2)^{1.5}$$

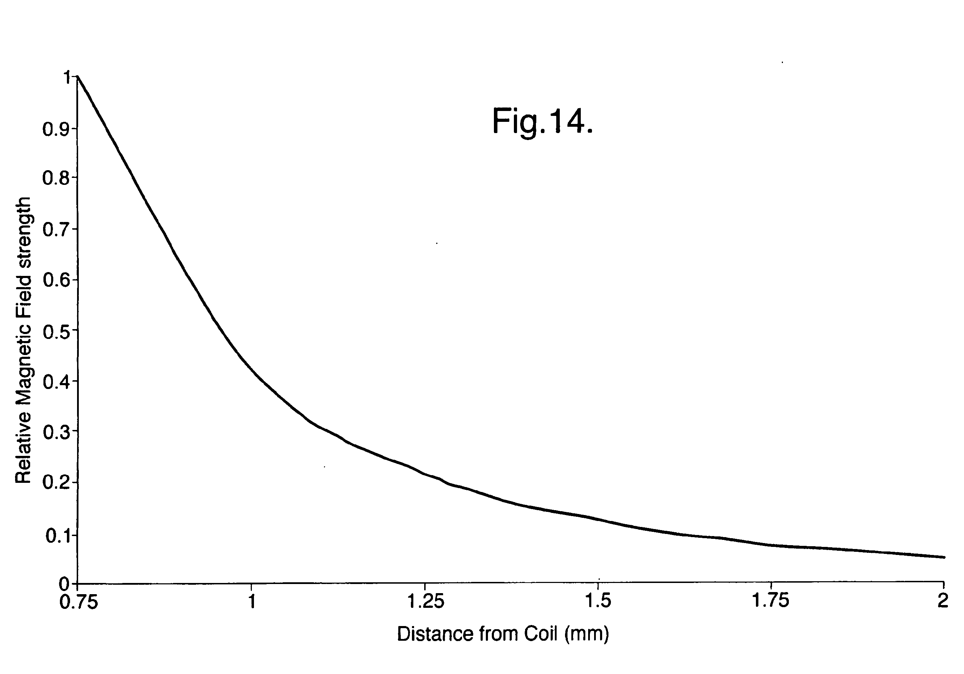

where the summation is from $m = 1$ to $m$. This equation shows that the magnetic field strength falls rapidly with distance along the central axis of the coil. Applying the above equation to the coils used in these investigations shows that the magnetic field decreases rapidly with distance from the centre of the coil (Figure 14). If the substrate is 1mm thick, then the intensity of the magnetic field for particles bound to the reaction surface is about 10 greater than for particles that are 1mm away from the surface. The calculation shows that the magnetic field created by the sensing coil, and hence the inductance of the coil, will be more strongly influenced by the particles on the reaction surface than the ones further away in the buffer solution. This model is a simplification as it deals only with the magnetic field and neglects such things as the permittivity of the substrate and the buffer solution. It also neglects the electric field associated with the rapidly oscillating magnetic field which will be affected by the high dielectric constant and high conductivity of the of the buffer solution: if these are taken into account then it is likely that the electromagnetic field created by the sensing coil falls even more rapidly than shown in Figure 14.

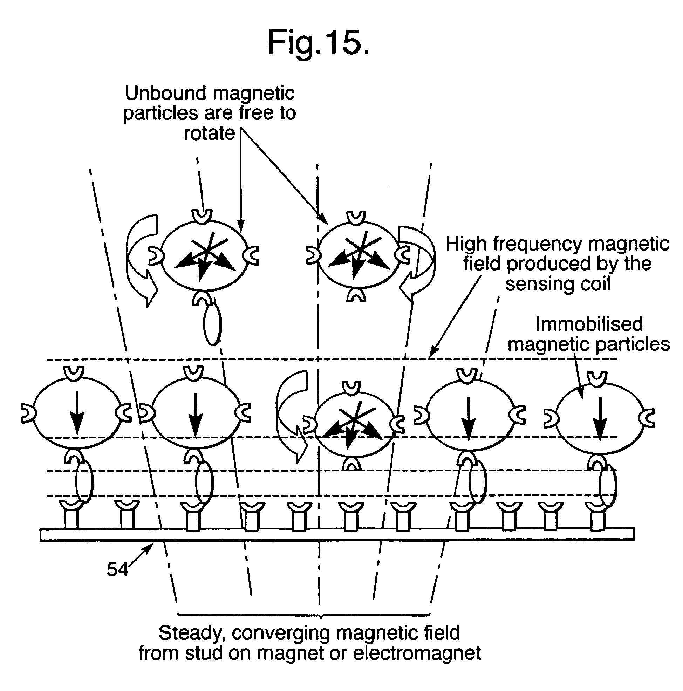

The particles used in these experiments have magnetic domains. The studs on the electromagnet or permanent magnet are positioned below the sensing coil and produce an intense, localised, magnetic field with a rapidly increasing flux density that induces magnetic moments into the particles and attracts them towards the reaction surface (Figure 15). Magnetic particles with attached analyte molecules bind quantitatively to the capture molecules on the reaction surface and the particles become immobilised. The magnetic domains in the immobilised particles will attempt to align along the direction of the magnetic field created by the stud. Collectively then, the immobilised particles have a large magnetic moment on the reaction surface which produces a significant perturbation in the intense, high-frequency magnetic field produced by the sensing coil, resulting in an increase in the inductance of the coil and a decrease in the resonant frequency. The unbound magnetic particles, however, are free to move and are subject to Brownian motion. In an extreme case, an unbound particle with its magnetic moment aligned along the steady field produced by the stud could be rotated by Brownian motion through 180° so that the moment is now in the wrong direction; the domain could flip its orientation by a process called Néel relaxation, but this is a relatively slow process compared with Brownian motion; so it is likely that the particle will have to wait until the Brownian motion returns the magnetic moment to alignment. Thus the magnetic moments of the unbound magnetic particles are much more randomly orientated than the bound particles and so have a smaller effect on the magnetic field produced by the sensing coil. Unbound particles further away from the reaction surface will also be affected by Brownian motion and, as the field produced by the studs is weaker here than the surface, the magnetic moments of these particles will be more strongly influenced by the Brownian motion. The high-frequency field produced by the sensing coil is also weaker further away from the reaction surface and so these unbound particles produce a negligible response in the sensing coil. In this way, the sensing system is able to distinguish between bound and unbound particles.

**Claims**

1. A method of performing a binding assay using magnetic particle detector system comprising a plurality of reaction surfaces; a corresponding plurality of electrical coils, each located adjacent a respective reaction surface; and a measuring system for measuring the effect of magnetic particles bound to a reaction surface on the inductance of the associated electrical coil, the output of the measuring system being indicative of the quantity of magnetic particles bound to the reaction sites, the method comprising providing different binding partners at the reaction sites; supplying a sample to the reaction vessel or test strip; supplying coated magnetic particles which attach to the binding partners via respective target analytes in the sample whereby the magnetic particles are caused to attach to the reaction sites in the presence of the target analytes in the sample; and monitoring the effect of magnetic particles bound to the reaction surfaces on the inductance of the corresponding coils to detect separately the quantity of magnetic particles attached to each reaction site, wherein the measuring system comprises a plurality of variable capacitors, each capacitor being connected to a respective electrical coil to define a respective test resonant circuit; a plurality of phase locked loops (PLL), each phase locked loop being connected to a respective test resonant circuit to cause the circuit to resonate, and to a respective mixer circuit; a reference resonant circuit and a reference PLL for causing the reference resonant circuit to resonate; each mixer circuit mixing, in use, the resonant frequency of the reference resonant circuit with the resonant frequency of the corresponding test resonant circuit to produce a beat frequency; and a switch to which the beat frequencies are supplied so as to be selectively connected to the measuring system; the measuring system including a controller for adjusting the variable capacitors and the switch.

2. A method of performing a binding assay using magnetic particle detector system comprising a plurality of reaction surfaces; a corresponding plurality of electrical coils, each located adjacent a respective reaction surface; and a measuring system for measuring the effect of magnetic particles bound to a reaction surface on the inductance of the associated electrical coil, the output of the measuring system being indicative of the quantity of magnetic particles bound to the reaction sites, the method comprising providing different binding partners at the reaction sites; supplying a sample to the reaction vessel or test strip; supplying coated magnetic particles which attach to the binding partners via respective target analytes in the sample whereby the magnetic particles are caused to attach to the reaction sites in the presence of the target analytes in the sample; and monitoring the effect of magnetic particles bound to the reaction surfaces on the inductance of the corresponding coils to detect separately the quantity of magnetic particles attached to each reaction site, wherein the measuring system comprises a plurality of variable capacitors, each capacitor being connected to a respective electrical coil to define a resonant circuit; an oscillator common to all the resonant circuits; a plurality of phase detectors for detecting the phase differences between the signal from the oscillator and corresponding resonant circuit frequencies and generating a corresponding output signal; a switch to which the output signals are fed and being actuable selectively to supply the output signals to a monitoring system; and a controller for controlling the switch and adjusting the capacitors in response to the output signals from the phase detectors.

3. A method of performing a binding assay using magnetic particle detector system comprising a plurality of reaction surfaces; a corresponding plurality of electrical coils, each located adjacent a respective reaction surface; and a measuring system for measuring the effect of magnetic particles bound to a reaction surface on the inductance of the associated electrical coil, the output of the measuring system being indicative of the quantity of magnetic particles bound to the reaction sites, the method comprising providing different binding partners at the reaction sites; supplying a sample to the reaction vessel or test strip; supplying coated magnetic particles which attach to the binding partners whereby the magnetic particles are caused to attach to the reaction sites and whereby, in the presence of the target analytes in the sample, the magnetic particles are caused to detach from the reaction sites due to preferential binding for the target analytes; and monitoring the affect of magnetic particles bound to the reaction surfaces on the inductance of the corresponding coils to detect separately the quantity of magnetic particles attached to each reaction site, wherein the measuring system comprises a plurality of variable capacitors, each capacitor being connected to a respective electrical coil to define a respective test resonant circuit; a plurality of phase locked loops (PLL), each phase locked loop being connected to a respective test resonant circuit to cause the circuit to resonate, and to a respective mixer circuit; a reference resonant circuit and a reference PLL for causing the reference resonant circuit to resonate; each mixer circuit mixing, in use, the resonant frequency of the reference resonant circuit with the resonant frequency of the corresponding test resonant circuit to produce a beat frequency; and a switch to which the beat frequencies are supplied so as to be selectively connected to the measuring system; the measuring system including a controller for adjusting the variable capacitors and the switch.

4. A method of performing a binding assay using magnetic particle detector system comprising a plurality of reaction surfaces; a corresponding plurality of electrical coils, each located adjacent a respective reaction surface; and a measuring system for measuring the effect of magnetic particles bound to a reaction surface on the inductance of the associated electrical coil, the output of the measuring system being indicative of the quantity of magnetic particles bound to the reaction sites, the method comprising providing different binding partners at the reaction sites; supplying a sample to the reaction vessel or test strip; supplying coated magnetic particles which attach to the binding partners whereby the magnetic particles are caused to attach to the reaction sites and whereby, in the presence of the target analytes in the sample, the magnetic particles are caused to detach from the reaction sites due to preferential binding for the target analytes; and monitoring the affect of magnetic particles bound to the reaction surfaces on the inductance of the corresponding coils to detect separately the quantity of magnetic particles attached to each reaction site, wherein the measuring system comprises a plurality of variable capacitors, each capacitor being connected to a respective electrical coil to define a resonant circuit; an oscillator common to all the resonant circuits; a plurality of phase detectors for detecting the phase differences between the signal from the oscillator and corresponding resonant circuit frequencies and generating a corresponding output signal; a switch to which the output signals are fed and being actuable selectively to supply the output signals to a monitoring system; and a controller for controlling the switch and adjusting the capacitors in response to the output signals from the phase detectors.

5. A method of performing a binding assay using magnetic particle detector system comprising a plurality of reaction surfaces; a corresponding plurality of electrical coils, each located adjacent a respective reaction surface; and a measuring system for measuring the effect of magnetic particles bound to a reaction surface on the inductance of the associated electrical coil, the output of the measuring system being indicative of the quantity of magnetic particles bound to the reaction sites, the method comprising providing different binding partners at the reaction sites; supplying a sample to the reaction vessel or test strip, the sample including at least one target analyte which is complementary to the binding partners at one of the reaction sites; supplying at least one competitor to which magnetic particles are attached, the or each competitor being complementary to the binding partners at one of the reaction sites, whereby the or each target analyte inhibits the binding of its respective competitor and attached magnetic particles to the respective reaction site; and monitoring the effect of magnetic particles bound to the reaction sites via the or each competitor on the inductance of the corresponding coils to detect separately the quantity of magnetic particles attached to each reaction site, wherein the measuring system comprises a plurality of variable capacitors, each capacitor being connected to a respective electrical coil to define a respective test resonant circuit; a plurality of phase locked loops (PLL), each phase locked loop being connected to a respective test resonant circuit to cause the circuit to resonate, and to a respective mixer circuit; a reference resonant circuit and a reference PLL for causing the reference resonant circuit to resonate; each mixer circuit mixing, in use, the resonant frequency of the reference resonant circuit with the resonant frequency of the corresponding test resonant circuit to produce a beat frequency; and a switch to which the beat frequencies are supplied so as to be selectively connected to the measuring system; the measuring system including a controller for adjusting the variable capacitors and the switch.

6. A method of performing a binding assay using magnetic particle detector system comprising a plurality of reaction surfaces; a corresponding plurality of electrical coils, each located adjacent a respective reaction surface; and a measuring system for measuring the effect of magnetic particles bound to a reaction surface on the inductance of the associated electrical coil, the output of the measuring system being indicative of the quantity of magnetic particles bound to the reaction sites, the method comprising providing different binding partners at the reaction sites; supplying a sample to the reaction vessel or test strip, the sample including at least one target analyte which is complementary to the binding partners at one of the reaction sites; supplying at least one competitor to which magnetic particles are attached, the or each competitor being complementary to the binding partners at one of the reaction sites, whereby the or each target analyte inhibits the binding of its respective competitor and attached magnetic particles to the respective reaction site; and monitoring the effect of magnetic particles bound to the reaction sites via the or each competitor on the inductance of the corresponding coils to detect separately the quantity of magnetic particles attached to each reaction site, wherein the measuring system comprises a plurality of variable capacitors, each capacitor being connected to a respective electrical coil to define a resonant circuit; an oscillator common to all the resonant circuits; a plurality of phase detectors for detecting the phase differences between the signal from the oscillator and corresponding resonant circuit frequencies and generating a corresponding output signal; a switch to which the output signals are fed and being actuable selectively to supply the output signals to a monitoring system; and a controller for controlling the switch and adjusting the capacitors in response to the output signals from the phase detectors.

7. A method of performing a binding assay using magnetic particle detector system comprising a plurality of reaction surfaces; a corresponding plurality of electrical coils, each located adjacent a respective reaction surface; and a measuring system for measuring the effect of magnetic particles bound to a reaction surface on the inductance of the associated electrical coil, the output of the measuring system being indicative of the quantity of magnetic particles bound to the reaction sites, the method comprising providing different competitors at the reaction sites; supplying a sample to the reaction vessel or test strip, the sample including at least one target analyte; supplying coated magnetic particles which are provided with binding partners which are complementary to at least one target analyte and to its respective competitor, whereby the or each target analyte inhibits the binding of the magnetic particles to the respective reaction site via its respective competitor; and monitoring the effect of magnetic particles bound to the reaction sites via the or each competitor on the inductance of the corresponding coils to detect separately the quantity of magnetic particles attached to each reaction site, wherein the measuring system comprises a plurality of variable capacitors, each capacitor being connected to a respective electrical coil to define a respective test resonant circuit; a plurality of phase locked loops (PLL), each phase locked loop being connected to a respective test resonant circuit to cause the circuit to resonate, and to a respective mixer circuit; a reference resonant circuit and a reference PLL for causing the reference resonant circuit to resonate; each mixer circuit mixing, in use, the resonant frequency of the reference resonant circuit with the resonant frequency of the corresponding test resonant circuit to produce a beat frequency; and a switch to which the beat frequencies are supplied so as to be selectively connected to the measuring system; the measuring system including a controller for adjusting the variable capacitors and the switch.

8. A method of performing a binding assay using magnetic particle detector system comprising a plurality of reaction surfaces; a corresponding plurality of electrical coils, each located adjacent a respective reaction surface; and a measuring system for measuring the effect of magnetic particles bound to a reaction surface on the inductance of the associated electrical coil, the output of the measuring system being indicative of the quantity of magnetic particles bound to the reaction sites, the method comprising providing different competitors at the reaction sites; supplying a sample to the reaction vessel or test strip, the sample including at least one target analyte; supplying coated magnetic particles which are provided with binding partners which are complementary to at least one target analyte and to its respective competitor, whereby the or each target analyte inhibits the binding of the magnetic particles to the respective reaction site via its respective competitor; and monitoring the effect of magnetic particles bound to the reaction sites via the or each competitor on the inductance of the corresponding coils to detect separately the quantity of magnetic particles attached to each reaction site, wherein the measuring system comprises a plurality of variable capacitors, each capacitor being connected to a respective electrical coil to define a resonant circuit; an oscillator common to all the resonant circuits; a plurality of phase detectors for detecting the phase differences between the signal from the oscillator and corresponding resonant circuit frequencies and generating a corresponding output signal; a switch to which the output signals are fed and being actuable selectively to supply the output signals to a monitoring system; and a controller for controlling the switch and adjusting the capacitors in response to the output signals from the phase detectors.

9. A method according to claim 7 or claim 8, wherein the coated magnetic particles are provided with binding partners which are complementary to more than one target analyte and their respective competitors.

10. A method according to any of the preceding claims, wherein the plurality of reaction surfaces are provided in a reaction vessel or on a test strip, wherein the magnetic particles are supplied to the reaction vessel or test strip at the same time as the sample.

11. A method according to any of the preceding claims, wherein the binding partners and target analytes are biological or chemical substances.

EP 1 747 461 B1

12. A method according to claim 11, wherein the binding partners and target analytes are chosen from antibody and corresponding antigen, hormone and hormone receptor, hormone and hormone binding protein, drug and drug receptor, enzyme and cofactor, transcription factor and DNA, subunits of a protein complex such as G-proteins, any signalling or transport protein and its control element, lectins and glycoproteins, lectins and carbohydrate moities, receptor protein and lipoprotein, lipid and lipoprotein, DNA and DNA, DNA and RNA, RNA and RNA, PNA and PNA, PNA and DNA, PNA and RNA, cell membrane proteins and virus, cell membrane proteins and spores, cell membrane proteins and bacteria.

13. A method according to any of the preceding claims, wherein the sample comprises a biological or chemical substance.

14. A method according to claim 13, wherein the sample comprises one of whole blood, plasma, serum, urine, a water sample, for example from a river, reservoir or lake, sewage, farm run-off, soil and plant extract.

15. A method according to any of the preceding claims, wherein the coils comprise planar spirals.

16. A method according to any of the preceding claims, wherein each coil is wire wound.

17. A method according to any of the preceding claims, wherein the plurality of reaction surfaces are provided in a reaction vessel or on a test strip.

18. A method according to any of the preceding claims, wherein one of the coils is adjacent a reaction site to which magnetic particles cannot be bound so as to act as a reference site.

19. A method according to any of the preceding claims, the system further comprising a processor for computing the number of particles bound to a reaction site from the measured effect on the inductance of the coil.

20. A method according to any of the preceding claims, wherein one or more of the reaction sites includes a plurality of binding partners attached thereto.

21. A method according to any of the preceding claims, the system further comprising a magnetic field generator for generating a magnetic field in the vicinity of the reaction sites to attract magnetic particles towards the reaction sites.

**Patentansprüche**

1. Methode zur Durchführung eines Bindungsassays unter Verwendung einer Vorrichtung zum Nachweis von Magnetpartikeln, umfassend eine Vielzahl von Reaktionsflächen; eine entsprechende Vielzahl von elektrischen, jeweils an entsprechenden Reaktionsflächen angrenzend angeordneten Spulen; sowie ein Messsystem zur Messung der wirkung der an eine Reaktionsfläche gebundenen Magnetpartikel auf die Induktivität der zugehörigen elektrischen Spule, wobei das Ausgangssignal des Messsystems für die Menge der an die Reaktionsflächen gebundenen Partikel indikativ ist; die Methode umfasst dabei die Bereitstellung unterschiedlicher Bindungspartner an den Reaktionsflächen oder auf den Teststreifen, die Bereitstellung einer Probe im Reaktionsgefäß oder auf dem Teststreifen, die Bereitstellung von beschichteten Magnetpartikeln, die über entsprechende Zielanalyten an die Bindungspartner in der Probe gebunden werden, wobei die Bindung der Magnetpartikel an den Reaktionsflächen in Gegenwart der Zielanalyten in der Probe bewirkt wird, und die Beobachtung der Wirkung der an jede Reaktionsfläche gebundenen Magnetpartikel auf die Induktivität der jeweiligen Spulen zum getrennten Nachweis der von jeder Reaktionsfläche gebundenen Magnetpartikel, wobei das Messsystem eine Vielzahl von variablen Kondensatoren aufweist und jeder Kondensator zur Definition eines entsprechenden mitschwingenden Schwingkreises mit einer entsprechenden elektrischen Spule verbunden ist; eine Vielzahl von phasenverriegelten Schleifen (PLL), jede von welchen an eine entsprechende, mitschwingende Prüfschaltung angeschlossen ist, sowie an eine entsprechende Mischschaltung mit einem entsprechenden Bezugsschwingkreis und einer PLL-Bezugsschleife zur Anregung des Schwingkreises, wobei jeder Mischkreis im Betrieb die Resonanzfrequenz des Bezugsschwingkreises mit der Schwingfrequenz des entsprechenden Prüfschwingkreises mischt, sodass eine Mischfrequenz entsteht; sowie mit einem Schaltglied, auf das die Mischfrequenzen aufgeschaltet werden, damit sie selektiv an das Messsystem angeschlossen werden können, wobei das Messsystem eine Steuerung zur Einregelung der einstellbaren Kondensatoren und des Schaltglieds aufweist.

2. Methode zur Durchführung eines Bindungsassays unter Verwendung einer Vorrichtung zum Nachweis von Magnetpartikeln, umfassend eine Vielzahl von Reaktionsflächen, eine entsprechende Vielzahl von elektrischen, jeweils an entsprechenden Reaktionsflächen angrenzend angeordneten Spulen, sowie ein Messsystem zur Messung der Wirkung der an eine Reaktionsfläche gebundenen Magnetpartikel auf die Induktivität der zugehörigen elektrischen Spule, wobei der Ausgang des Messsystems die Menge der an die Reaktionsflächen gebundenen Partikel kennzeichnet; die Methode umfasst dabei die Bereitstellung unterschiedlicher Bindungspartner an den Reaktionsflächen oder auf dem Teststreifen, die Bereitstellung einer Probe im Reaktionsgefäß oder auf dem Teststreifen, die Bereitstellung von beschichteten Magnetpartikeln, die über entsprechende Zielanalyten an die Bindungspartner in der Probe gebunden werden, wobei die Bindung der Magnetpartikel an den Reaktionsflächen in Gegenwart der Zielanalyten in der Probe bewirkt wird, und die Beobachtung der Wirkung der an jede Reaktionsfläche gebundenen Magnetpartikel auf die Induktivität der jeweiligen Spulen zum getrennten Nachweis der von jeder Reaktionsfläche gebundenen Magnetpartikel, wobei das Messsystem eine Vielzahl von variablen Kondensatoren aufweist, jeder Kondensator zur Definition eines entsprechenden mitschwingenden Schwingkreises mit einer entsprechenden elektrischen Spule verbunden ist; und mit einem allen Schwingkreisen gemeinsamen Oszillator, einer Vielzahl von Phasendetektoren zur Bestimmung des Phasenunterschieds zwischen dem Signal des Oszillators und den jeweiligen Frequenzen der mitschwingenden Schaltungen und Generierung eines entsprechenden Ausgangssignals; ein Schaltglied, auf das die Ausgangssignale aufgeschaltet werden, das selektiv zur Einspeisung der Ausgangssignale in ein Überwachungssystem geschaltet werden kann, sowie eine Steuerung zur Steuerung der Ausgangssignale der Phasendetektoren.

3. Methode zur Durchführung eines Bindungsassays unter Verwendung einer Vorrichtung zum Nachweis von Magnetpartikeln, umfassend eine Vielzahl von Reaktionsflächen; eine entsprechende Vielzahl von jeweils angrenzend an eine entsprechende Reaktionsfläche angeordneten elektrischen Spulen, sowie ein Messsystem zur Messung der Wirkung der an die Reaktionsfläche gebundenen Magnetpartikel auf die Induktivität der zugehörigen elektrischen Spule, wobei das Ausgangssignal des Messsystems für die Menge der an den Reaktionsflächen gebundenen Magnetpartikeln indikativ ist und die Methode unterschiedliche Bindungspartner an den Reaktionsflächen bereitstellt; Bereitstellung einer Probe im Reaktionsgefäß oder auf dem Prüfstreifen; Bereitstellung von beschichteten Magnetpartikeln, die an die Bindungspartner gebunden werden, damit die Magnetpartikel an den Reaktionsflächen haften, sodass in Gegenwart der Zielanalyten in der Probe wegen der bevorzugten Bindung der Zielanalyten die Ablösung der Magnetpartikel von den Reaktionsflächen bewirkt wird; sowie Überwachung der Wirkung der an den Reaktionsflächen haftenden Magnetpartikel auf die Induktivität der jeweiligen Spulen zur getrennten Erfassung der Mengen von Magnetpartikeln, die an jeder Reaktionsfläche haften, wobei das Messsystem eine Vielzahl von variablen Kondensatoren aufweist, von denen jeder an eine zugehörige elektrische Spule angeschlossen ist und jeder Kondensator zur Definition eines entsprechenden mitschwingenden Schwingkreises mit einer entsprechenden elektrischen Spule verbunden ist; eine Vielzahl von phasenverriegelten Schleifen (PLL), jede von welchen an eine entsprechende, mitschwingende Prüfschaltung sowie an eine entsprechende Mischschaltung angeschlossen ist; einem Bezugsschwingkreis, und einer PLL-Bezugsschleife zur Anregung des Schwingkreises, wobei jeder Mischkreis im Betrieb die Resonanzfrequenz des Bezugsschwingkreises mit der Schwingfrequenz des entsprechenden Prüfschwingkreises mischt, sodass eine Mischfrequenz entsteht; sowie mit einem Schaltglied, auf das die Mischfrequenzen aufgeschaltet werden, damit sie selektiv an das Messsystem angeschlossen werden können, wobei das Messsystem eine Steuerung zur Einregelung der einstellbaren Kondensatoren und des Schaltglieds aufweist.

4. Methode zur Durchführung eines Bindungsassays unter Verwendung einer Vorrichtung zum Nachweis von Magnetpartikeln, umfassend eine Vielzahl von Reaktionsflächen, eine entsprechende Vielzahl von elektrischen, jeweils an eine entsprechende Reaktionsfläche angrenzenden Spulen, sowie ein Messsystem zur Messung der Wirkung der an eine Reaktionsfläche gebundenen Magnetpartikel auf die Induktivität der zugehörigen elektrischen Spule, wobei des Ausgangssignal des Messsystems für die Menge der an den Reaktionsflächen gebundenen Magnetpartikel indikativ ist und die Methode unterschiedliche Bindungspartner an den Reaktionsflächen bereitstellt; Bereitstellung einer Probe im Reaktionsgefäß oder am Prüfstreifen; Bereitstellung von beschichteten Magnetpartikeln, die an die Bindungspartner gebunden werden, sodass die Magnetpartikel an den Reaktionsflächen haften, wodurch in Gegenwart der Zielanalyten in der Probe wegen der bevorzugten Bindung der Zielanalyten die Ablösung der Magnetpartikel von den Reaktionsflächen bewirkt wird, sowie Überwachung der Wirkung der an den Reaktionsflächen haftenden Magnetpartikel auf die Induktivität der jeweiligen Spulen zur getrennten Erfassung der Mengen von Magnetpartikeln, die an jeder Reaktionsfläche haften, wobei das Messsystem eine Vielzahl von variablen Kondensatoren aufweist, von denen jeder an eine zugehörige elektrische Spule angeschlossen ist und jeder Kondensator zur Definition eines entsprechenden mitschwingenden Schwingkreises mit einer entsprechenden elektrischen Spule verbunden ist, und mit einem allen Schwingkreisen gemeinsamen Oszillator; eine Vielzahl von Phasendetektoren zur Bestimmung des Phasenunterschieds zwischen dem Signal des Oszillators und den jeweiligen Frequenzen der mitschwingenden Schaltungen und Generierung eines entsprechenden Ausgangssignals; mit einem Schaltglied, auf das die Ausgangssignale aufgeschaltet werden und das selektiv zur Einspeisung der Ausgangssignale mit dem Überwachungssystem verbunden werden kann, sowie mit einer Steuerung zur Steuerung des Schaltglieds und zur Regelung der Ausgangssignale der Phasendetektoren.

5. Methode zur Durchführung eines Bindungsassays unter Verwendung einer Vorrichtung zum Nachweis von Magnetpartikeln, umfassend eine Vielzahl von Reaktionsflächen, eine entsprechende Vielzahl von jeweils an eine entsprechende Reaktionsfläche angrenzenden Spulen, sowie ein Messsystem zur Messung der Wirkung der an eine Reaktionsfläche gebundenen Magnetpartikel auf die Induktivität der zugehörigen elektrischen Spule, wobei das Ausgangssignal des Messsystems für die Menge der an die Reaktionsflächen gebundenen Magnetpartikel indikativ ist und die Methode die Bereitstellung unterschiedlicher Bindungspartner an den Reaktionsflächen beinhaltet; Bereitstellung einer Probe im Reaktionsgefäß oder auf dem Teststreifen, wobei die Probe wenigstens einen Zielanalyten enthält, der komplementär zu den Bindungspartnern an einer der Reaktionsflächen wirkt; Bereitstellung wenigstens eines Konkurrenten, an dem Magnetpartikel haften, wobei der bzw. jeder Konkurrent ergänzend zu den Bindungspartnern an einem der Reaktionsflächen wirken muss, sodass der bzw. jeder Zielanalyt die Bindung seines jeweiligen Konkurrenten und haftender Magnetpartikel an der jeweiligen Reaktionsfläche unterbindet; sowie Überwachung der Wirkung der an die Reaktionsflächen gebundenen Magnetpartikel über den bzw. jeden Konkurrenten auf die Induktivität der entsprechenden Spulen zur getrennten Bestimmung der an jeder Reaktionsfläche haftenden Menge von Magnetpartikeln, wobei das Messsystem eine Vielzahl von variablen Kondensatoren aufweist, jeder Kondensator zur Definition eines entsprechenden mitschwingenden Schwingkreises mit einer entsprechenden elektrischen Spule verbunden ist; eine Vielzahl von phasenverriegelten Schleifen (PLL), jede von welchen an eine entsprechende, mitschwingende Prüfschaltung angeschlossen ist, sowie an eine entsprechende Mischschaltung, mit einem entsprechenden Bezugsschwingkreis, und einer PLL-Bezugsschleife zur Anregung des Schwingkreises, wobei jeder Mischkreis im Betrieb die Resonanzfrequenz des Bezugsschwingkreises mit der Schwingfrequenz des entsprechenden Prüfschwingkreises mischt, sodass eine Mischfrequenz entsteht; sowie mit einem Schaltglied, auf das die Mischfrequenzen aufgeschaltet werden, damit sie selektiv an das Messsystem angeschlossen werden können, wobei das Messsystem eine Steuerung zur Einregelung der einstellbaren Kondensatoren und des Schaltglieds aufweist.

6. Methode zur Durchführung eines Bindungsassays unter Verwendung einer Vorrichtung zum Nachweis von Magnetpartikeln umfassend eine Vielzahl von Reaktionsflächen, eine entsprechende Vielzahl von elektrischen, jeweils an entsprechende Reaktionsflächen angrenzende elektrische Spulen, sowie ein Messsystem zur Messung der Wirkung von an einer Reaktionsfläche haftenden Magnetpartikeln auf die Induktivität der zugehörigen elektrische Spule, wobei das Ausgangssignal des Messsystem für die Menge der an die Reaktionsflächen gebundenen Magnetpartikel indikativ ist und das Verfahren verschiedene Bindungspartner an den Reaktionsflächen verwendet; Bereitstellung einer Probe im Reaktionsgefäß oder auf dem Teststreifen, wobei die Probe wenigstens einen Zielanalyten enthält, der komplementär zu den Bindungspartnern an einer der Reaktionsflächen wirkt; Bereitstellung wenigstens eines Konkurrenten, an dem Magnetpartikel haften, wobei der bzw. jeder Konkurrenten ergänzend zu den Bindungspartnern an einem der Reaktionsflächen wirken muss, sodass der bzw. jeder Zielanalyt die Bindung seines jeweiligen Konkurrenten und haftender Magnetpartikel an der jeweiligen Reaktionsfläche unterbindet; sowie Überwachung der Wirkung der an die Reaktionsflächen gebundenen Magnetpartikel über den bzw. jeden Konkurrenten auf die Induktivität der entsprechenden Spulen zur getrennten Bestimmung der an jeder Reaktionsfläche haftenden Menge von Magnetpartikeln, wobei das Messsystem eine Vielzahl von variablen Kondensatoren aufweist, jeder Kondensator zur Definition eines entsprechenden mitschwingenden Schwingkreises mit einer entsprechenden elektrischen Spule verbunden ist, und mit einem allen Schwingkreisen gemeinsamen Oszillator; eine Vielzahl von Phasendetektoren zur Bestimmung des Phasenunterschieds zwischen dem Signal des Oszillators und den jeweiligen Frequenzen der mitschwingenden Schaltungen und Generierung eines entsprechenden Ausgangssignals, mit einem Schaltglied, auf das die Ausgangssignale aufgeschaltet werden, und das selektiv zur Einspeisung der Ausgangssignale in ein Überwachungssystem geschaltet werden kann, sowie mit einer Steuerung zur Steuerung der Ausgangssignale der Phasendetektoren.

7. Methode zur Durchführung eines Bindungsassays unter Verwendung einer Vorrichtung zum Nachweis von Magnetpartikeln, umfassend eine vielzahl von Reaktionsflächen, eine entsprechende Vielzahl von elektrischen, jeweils an entsprechende Reaktionsflächen angrenzenden elektrischen Spulen, sowie ein Messsystem zur Messung der Wirkung von an einer Reaktionsfläche haftenden Magnetpartikeln auf die Induktivität der zugehörigen elektrische Spule, wobei das Ausgangssignal des Messsystems für die an die Reaktionsflächen gebundenen Magnetpartikel indikativ ist und das Verfahren verschiedene Bindungspartner an den Reaktionsflächen verwendet; Bereitstellung einer Probe im Reaktionsgefäß oder auf einem Teststreifen, wobei die Probe wenigstens einen Zielanalyten enthält; Bereitstellung beschichteter Magnetpartikel für die Bindungspartner, die wenigsten zu einem Zielanalyten und dessen jeweiligem Konkurrenten komplementär wirken, sodass der eine oder jeder Zielanalyt die Bindung der Magnetpartikel mit der jeweiligen Reaktionsfläche mit seinem jeweiligen Konkurrenten unterbindet; sowie Überwachung der von oder von jedem Konkurrenten an die Reaktionsflächen gebundenen Magnetpartikel ausgeübtenn Wirkung auf die Induktivität der entsprechenden Spulen zur getrennten Bestimmung der an jeder Reaktionsfläche haftenden Magnetpartikelmenge, wobei das Messsystem eine Vielzahl von variablen Kondensatoren aufweist und jeder Kondensator zur Definition eines entsprechenden mitschwingenden Schwingkreises mit einer entsprechenden elektrischen Spule verbunden ist; einer Vielzahl von phasenverriegelten Schleifen (PLL), jede von welchen an eine entsprechende, mitschwingende Prüfschaltung sowie an eine entsprechende Mischschaltung angeschlossen ist; mit einem entsprechenden Bezugsschwingkreis, und einer PLL-Bezugsschleife zur Anregung des Schwingkreises, wobei jeder Mischkreis im Betrieb die Resonanzfrequenz des Bezugsschwingkreises mit der Schwingfrequenz des entsprechenden Prüfschwingkreises mischt, sodass eine Mischfrequenz entsteht; sowie mit einem Schaltglied, auf das die Mischfrequenzen aufgeschaltet werden, sodass sie selektiv an das Messsystem angeschlossen werden können, wobei das Messsystem eine Steuerung zur Einregelung der einstellbaren Kondensatoren und des Schaltglieds aufweist.

8. Methode zur Durchführung eines Bindungsassays unter Verwendung einer Vorrichtung zum Nachweis von Magnetpartikeln, umfassend eine Vielzahl von Reaktionsflächen, eine entsprechende Vielzahl von elektrischen, jeweils an entsprechende Reaktionsflächen angrenzende elektrischen Spulen, sowie ein Messsystem zur Messung der Wirkung von an einer Reaktionsfläche haftenden Magnetpartikeln auf die Induktivität der zugehörigen elektrischen Spule, wobei das Ausgangssignal des Messsystem für die an die Reaktionsflächen gebundenen Magnetpartikel indikativ ist, das Verfahren verschiedene Bindungspartner an den Reaktionsflächen verwendet und die Methode die Bereitstellung unterschiedlicher Konkurrenten an den Reaktionsflächen umfasst; Bereitstellung einer Probe im Reaktionsgefäß oder auf einem Teststreifen, wobei die Probe wenigstens einen Zielanalyten enthält, Bereitstellung beschichteter Magnetpartikel mit Bindungspartnern, die komplementär zu wenigstens einem Zielanalyten und seinem jeweiligen Konkurrenten wirken müssen, wobei der oder jeder Zielanalyt die Bindung der Magnetpartikel an der jeweiligen Reaktionsfläche über seinen jeweiligen Konkurrenten unterbindet; sowie Überwachung der wirkung der an die Reaktionsflächen gebundenen Magnetpartikel über den bzw. jeden Konkurrenten auf die Induktivität der entsprechenden Spulen zur getrennten Bestimmung der an jeder Reaktionsfläche haftenden Menge von Magnetpartikeln, wobei das Messsystem eine vielzahl von variablen Kondensatoren aufweist, jeder Kondensator zur Definition eines entsprechenden mitschwingenden Schwingkreises mit einer entsprechenden elektrischen Spule verbunden ist, und mit einem allen Schwingkreisen gemeinsamen Oszillator; eine Vielzahl von Phasendetektoren zur Bestimmung des Phasenunterschieds zwischen dem Signal des Oszillators und den jeweiligen Frequenzen der mitschwingenden Schaltungen und Generierung eines entsprechenden Ausgangssignals; ein Schaltglied, auf das die Ausgangssignale aufgeschaltet werden, und das selektiv zur Einspeisung der Ausgangssignale in ein Überwachungssystem geschaltet werden kann, sowie mit einer Steuerung zur Steuerung der Ausgangssignale der Phasendetektoren.

9. Methode gemäß Anspruch 7 oder Anspruch 8, bei der die beschichteten Magnetpartikel Bindungspartner erhalten, die komplementär zu mehr als einem Zielanalyten sowie deren jeweiligen Konkurrenten wirken.

10. Methode gemäß einem beliebigen der vorhergehenden Ansprüche, bei dem die Vielzahl von Reaktionsflächen in einem Reaktionsgefäß oder auf einem Teststreifen bereitgestellt werden, wobei die Magnetpartikel dem Reaktionsgefäß oder dem Teststreifen zur gleichen Zeit wie die Probe zugestellt werden.

11. Methode gemäß einem beliebigen der vorhergehenden Ansprüche, bei dem die Bindungspartner und die Zielanalyten biologische oder chemische Substanzen sind.

12. Methode gemäß Anspruch 11, bei der die Auswahl der Bindungspartner und der Zielanalyten unter Antikörpern und entsprechenden Antigenen, Hormonen und Hormonrezeptoren, Hormonen und hormonbindenden Proteinen, Medikamenten und Medikamentrezeptoren, Enzymen und Kofaktoren, Transkriptionsfaktoren und DNA, Teilen von Proteinkomplexen wie G-Proteine, beliebigen Signal- oder Transportproteinen und deren Steuerelementen, Lektinen und Glykoproteinen, Lektinen und funktionellen Kohlehydratgruppen, Rezeptorproteinen und Lipoproteinen, Lipiden und Lipoproteinen, DNA und DNA, DNA und RNA, RNA und RNA, PNA und PNA, PNA und DNA, PNA und RNA, Zellmembranproteinen und Viren, Zellmembranproteinen und Sporen, Zellmembranproteinen und Bakterien erfolgt.

13. Methode gemäß einem beliebigen der vorhergehenden Ansprüche, bei dem die Probe eine biologische oder chemische Substanz ist.

**14.** Methode gemäß Anspruch 13, bei der die Probe eine Probe aus Vollblut, Plasma, Serum, Harn, oder eine beispielsweise aus einem Fluss, Speicher oder See stammenden Wasserprobe, eine Abwasserprobe, landwirtschaftliche Wasserablaufprobe, Bodenprobe oder ein Pflanzenextrakt ist.

**15.** Methode gemäß einem beliebigen der vorhergehenden Ansprüche, bei der es sich bei den Spulen um planare Spiralen handelt.

**16.** Methode gemäß einem beliebigen der vorhergehenden Ansprüche, bei der jede Spule eine wickeldrahtspule ist.

**17.** Methode gemäß einem beliebigen der vorhergehenden Ansprüche, bei der die Vielzahl der Reaktionsflächen in einem Reaktionsgefäß oder auf einem Teststreifen angeordnet ist.

**18.** Methode gemäß einem beliebigen der vorhergehenden Ansprüche, bei der eine der Spulen angrenzend an eine Reaktionsfläche angeordnet ist, an der eine Bindung von Magnetpartikeln nicht möglich ist, sodass diese als Bezugsfläche wirkt.

**19.** Methode gemäß einem beliebigen der vorhergehenden Ansprüche, bei der das System des Weiteren einen Prozessor zur Berechnung der Anzahl an einer Reaktionsfläche haftenden Partikel aus der gemessenen Wirkung auf die Induktivität der Spule umfasst.

**20.** Methode gemäß einem beliebigen der vorhergehenden Ansprüche, bei dem eine oder mehrere der Reaktionsflächen eine Vielzahl von an diese gebundenen Bindungspartnern aufweist.

**21.** Methode gemäß einem beliebigen der vorhergehenden Ansprüche, bei der das System des Weiteren einen Magnetfeldgenerator zur Erzeugung eines Magnetfelds in der Nähe der Reaktionsflächen aufweist, sodass Magnetpartikel auf die Reaktionsflächen gezogen werden.

**Revendications**

**1.** Une méthode de réalisation d'un titrage de liaison en utilisant un système détecteur de particules magnétiques et composé de toute une série de surfaces de réaction, de toute une série correspondante de bobines électriques, chacune d'entre elles se situant à côté d'une surface respective de réaction, et d'un système de mesure permettant de mesurer l'effet des particules magnétiques liées à une surface de réaction sur l'inductance de la bobine électrique associée, la sortie du système de mesure étant indicative de la quantité des particules magnétiques liées aux sites de réactions, la méthode consistant à fournir différents partenaires de liaison aux sites de réactions, afin de fournir un échantillon à la cuve de réaction ou à la baguette d'essai, en fournissant des particules magnétiques enduites qui viennent se fixer aux partenaires de liaison par le biais d'analytes respectifs ciblés présents dans l'échantillon et qui font que les particules magnétiques viennent se fixer sur les sites de réactions en présence des analytes ciblés dans l'échantillon et en surveillant l'effet des particules magnétiques liées aux surfaces de réaction sur l'inductance des bobines correspondantes afin de détecter séparément la quantité de particules magnétiques rattachées à chaque site de réaction , de telle sorte que le système de mesure se compose de toute une série de condensateurs variables, chaque condensateur étant raccordé à une bobine électrique respective pour définir un circuit respectif résonnant d'essai, toute une série de boucles verrouillées en phase (PLL), chaque boucle verrouillée en phase étant raccordée à un circuit respectif résonnant d'essai afin de provoquer la résonnance du circuit et d'un circuit respectif mélangeur, d'un circuit résonnant de référence et d'une boucle PLL de référence pour provoquer la résonnance du circuit résonnant de référence, chaque circuit mélangeur assurant le mélange, en cours d'utilisation, de la fréquence résonnante du circuit résonnant de référence avec la fréquence résonnante du circuit résonnant correspondant d'essai afin de produire une fréquence de battement, et d'un contacteur assurant l'alimentation en fréquences de battement afin d'assurer une connexion sélective au système de mesure, le système de mesure se composant d'un régulateur qui permet d'ajuster les condensateurs variables et le contacteur.

**2.** Une méthode de réalisation d'un titrage de liaison en utilisant un système détecteur de particules magnétiques et composé de toute une série de surfaces de réaction, de toute une série correspondante de bobines électriques, chacune d'entre elles se situant à côté d'une surface respective de réaction, et d'un système de mesure permettant de mesurer l'effet des particules magnétiques liées à une surface de réaction sur l'inductance de la bobine électrique associée, la sortie du système de mesure étant indicative de la quantité des particules magnétiques liées aux sites de réactions, la méthode consistant à fournir différents partenaires de liaison aux sites de réactions, afin de fournir un échantillon à la cuve de réaction ou à la baguette d'essai, en fournissant des particules magnétiques enduites qui viennent se fixer aux partenaires de liaison par le biais d'analytes respectifs ciblés présents dans l'échantillon et qui font que les particules magnétiques viennent se fixer sur les sites de réactions en présence des analytes ciblés dans l'échantillon et en surveillant l'effet des particules magnétiques liées aux surfaces de réaction sur l'inductance des bobines correspondantes afin de détecter séparément la quantité de particules magnétiques rattachées à chaque site de réaction , de telle sorte que le système de mesure se compose de toute une série de condensateurs variables, chaque condensateur étant raccordé à une bobine électrique respective pour définir un circuit résonnant, d'un oscillateur commun à tous les circuits résonants, d'un oscillateur commun à tous les circuits résonants, de toute une série de détecteurs de phases permettant de détecter les différences de phases entre le signal provenant de l'oscillateur et les fréquences correspondantes du circuit résonnant et en produisant un signal correspondant de sortie, d'un contacteur auquel aboutissent les signaux de sorties et qui peuvent être actionnés de manière sélective pour envoyer les signaux de sortie à un système de surveillance et d'un contrôleur qui permet de contrôler le contacteur et d'ajuster les condensateurs en réponse aux signaux se sortie provenant des détecteurs de phases.

3. Une méthode de réalisation d'un titrage de liaison en utilisant un système détecteur de particules magnétiques et composé de toute une série de surfaces de réaction, de toute une série correspondante de bobines électriques, chacune d'entre elles se situant à côté d'une surface respective de réaction, et d'un système de mesure permettant de mesurer l'effet des particules magnétiques liées à une surface de réaction sur l'inductance de la bobine électrique associée, la sortie du système de mesure étant indicative de la quantité des particules magnétiques liées aux sites de réactions, la méthode consistant à fournir différents partenaires de liaison aux sites de réactions, afin de fournir un échantillon à la cuve de réaction ou à la baguette d'essai, en fournissant des particules magnétiques enduites qui viennent se fixer aux partenaires de liaison et qui font que les particules magnétiques viennent se fixer sur les sites de réactions et qui font que, en présence des analytes ciblés dans l'échantillon, les particules magnétiques sont forcées de se détacher des sites de réactions du fait de la liaison préférentielle favorisant les analytes ciblés et en surveillant l'effet des particules magnétiques liées aux surfaces de réaction sur l'inductance des bobines correspondantes afin de détecter séparément la quantité de particules magnétiques rattachées à chaque site de réaction , de telle sorte que le système de mesure se compose de toute une série de condensateurs variables, chaque condensateur étant raccordé à une bobine électrique respective pour définir un circuit respectif résonnant d'essai, de toute une série de boucles verrouillées en phase (PLL), chaque boucle verrouillée en phase étant raccordée à un circuit respectif résonnant d'essai afin de provoquer la résonnance du circuit et d'un circuit respectif mélangeur, d'un circuit résonnant de référence et d'une boucle PLL de référence pour provoquer la résonnance du circuit résonnant de référence, chaque circuit mélangeur assurant le mélange, en cours d'utilisation, de la fréquence résonnante du circuit résonnant de référence avec la fréquence résonnante du circuit résonnant correspondant d'essai afin de produire une fréquence de battement, et d'un contacteur assurant l'alimentation en fréquences de battement afin d'assurer une connexion sélective au système de mesure, le système de mesure se composant d'un régulateur qui permet d'ajuster les condensateurs variables et le contacteur.

4. Une méthode de réalisation d'un titrage de liaison en utilisant un système détecteur de particules magnétiques et composé de toute une série de surfaces de réaction, de toute une série correspondante de bobines électriques, chacune d'entre elles se situant à côté d'une surface respective de réaction, et d'un système de mesure permettant de mesurer l'effet des particules magnétiques liées à une surface de réaction sur l'inductance de la bobine électrique associée, la sortie du système de mesure étant indicative de la quantité des particules magnétiques liées aux sites de réactions, la méthode consistant à fournir différents partenaires de liaison aux sites de réactions, afin de fournir un échantillon à la cuve de réaction ou à la baguette d'essai, en fournissant des particules magnétiques enduites qui viennent se fixer aux partenaires de liaison et qui font que les particules magnétiques viennent se fixer sur les sites de réactions et qui font que, en présence des analytes ciblés dans l'échantillon, les particules magnétiques sont forcées de se détacher des sites de réactions du fait de la liaison préférentielle favorisant les analytes ciblés et en surveillant l'effet des particules magnétiques liées aux surfaces de réaction sur l'inductance des bobines correspondantes afin de détecter séparément la quantité de particules magnétiques rattachées à chaque site de réaction , de telle sorte que le système de mesure se compose de toute une série de condensateurs variables, chaque condensateur étant raccordé à une bobine électrique respective pour définir un circuit résonnant, d'un oscillateur commun à tous les circuits résonants, d'un oscillateur commun à tous les circuits résonants, de toute une série de détecteurs de phases permettant de détecter les différences de phases entre le signal provenant de l'oscillateur et les fréquences correspondantes du circuit résonnant et en produisant un signal correspondant de sortie, d'un contacteur auquel aboutissent les signaux de sorties et qui peuvent être actionnés de manière sélective pour envoyer les signaux de sortie à un système de surveillance et d'un contrôleur qui permet de contrôler le contacteur et d'ajuster les condensateurs en réponse aux signaux se sortie provenant des détecteurs de phases.

**5.** Une méthode de réalisation d'un titrage de liaison en utilisant un système détecteur de particules magnétiques et composé de toute une série de surfaces de réaction, de toute une série correspondante de bobines électriques, chacune d'entre elles se situant à côté d'une surface respective de réaction, et d'un système de mesure permettant de mesurer l'effet des particules magnétiques liées à une surface de réaction sur l'inductance de la bobine électrique associée, la sortie du système de mesure étant indicative de la quantité de particules magnétiques liées aux sites de réactions, la méthode consistant à fournir différents partenaires de liaison aux sites de réactions, afin de fournir un échantillon à la cuve de réaction ou à la baguette d'essai, cet échantillon comportant au moins un analyte ciblé qui est complémentaire des partenaires de liaison sur au moins un des sites de réactions, en fournissant au moins un concurrent sur lequel sont rattachées des particules magnétiques , ce concurrent ou chaque concurrent étant complémentaire des partenaires de liaison sur au moins un des sites de réactions, de telle sorte que l'analyte ciblé ou chaque analyte ciblé vienne inhiber la liaison de son concurrent respectif et des particules magnétiques rattachées sur le site respectif de réaction du site et en surveillant l'effet des particules magnétiques liées aux sites de réactions par le biais du concurrent ou de chaque concurrent sur l'inductance des bobines correspondantes afin de détecter séparément la quantité de particules magnétiques rattachées à chaque site de réaction, de telle sorte que le système de mesure se compose de toute une série de condensateurs variables, chaque condensateur étant raccordé à une bobine électrique respective pour définir un circuit respectif résonnant d'essai, de toute une série de boucles verrouillées en phase (PLL), chaque boucle verrouillée en phase étant raccordée à un circuit respectif résonnant d'essai afin de provoquer la résonnance du circuit et d'un circuit respectif mélangeur, d'un circuit résonnant de référence et d'une boucle PLL de référence pour provoquer la résonnance du circuit résonnant de référence, chaque circuit mélangeur assurant le mélange, en cours d'utilisation, de la fréquence résonnante du circuit résonnant de référence avec la fréquence résonnante du circuit résonnant correspondant d'essai afin de produire une fréquence de battement, et d'un contacteur assurant l'alimentation en fréquences de battement afin d'assurer une connexion sélective au système de mesure, le système de mesure se composant d'un régulateur qui permet d'ajuster les condensateurs variables et le contacteur.

**6.** Une méthode de réalisation d'un titrage de liaison en utilisant un système détecteur de particules magnétiques et composé de toute une série de surfaces de réaction, de toute une série correspondante de bobines électriques, chacune d'entre elles se situant à côté d'une surface respective de réaction, et d'un système de mesure permettant de mesurer l'effet des particules magnétiques liées à une surface de réaction sur l'inductance de la bobine électrique associée, la sortie du système de mesure étant indicative de la quantité des particules magnétiques liées aux sites de réactions, la méthode consistant à fournir différents partenaires de liaison aux sites de réactions, afin de fournir un échantillon à la cuve de réaction ou à la baguette d'essai, cet échantillon comportant au moins un analyte ciblé qui est complémentaire des partenaires de liaison sur au moins un des sites de réactions, en fournissant au moins un concurrent sur lequel sont rattachées des particules magnétiques , ce concurrent ou chaque concurrent étant complémentaire des partenaires de liaison sur au moins un des sites de réactions, de telle sorte que l'analyte ciblé ou chaque analyte ciblé vienne inhiber la liaison de son concurrent respectif et des particules magnétiques rattachées sur le site respectif de réaction du site et en surveillant l'effet des particules magnétiques liées aux sites de réactions par le biais du concurrent ou de chaque concurrent sur l'inductance des bobines correspondantes afin de détecter séparément la quantité de particules magnétiques rattachées à chaque site de réaction , de telle sorte que le système de mesure se compose de toute une série de condensateurs variables, chaque condensateur étant raccordé à une bobine électrique respective pour définir un circuit résonnant, d'un oscillateur commun à tous les circuits résonants, d'un oscillateur commun à tous les circuits résonnants, de toute une série de détecteurs de phases permettant de détecter les différences de phases entre le signal provenant de l'oscillateur et les fréquences correspondantes du circuit résonnant et en produisant un signal correspondant de sortie, d'un contacteur auquel aboutissent les signaux de sorties et qui peuvent être actionnés de manière sélective pour envoyer les signaux de sortie à un système de surveillance et d'un contrôleur qui permet de contrôler le contacteur et d'ajuster les condensateurs en réponse aux signaux se sortie provenant des détecteurs de phases.

**7.** Une méthode de réalisation d'un titrage de liaison en utilisant un système détecteur de particules magnétiques et composé de toute une série de surfaces de réaction, de toute une série correspondante de bobines électriques, chacune d'entre elles se situant à côté d'une surface respective de réaction, et d'un système de mesure permettant de mesurer l'effet des particules magnétiques liées à une surface de réaction sur l'inductance de la bobine électrique associée, la sortie du système de mesure étant indicative de la quantité des particules magnétiques liées aux sites de réactions, la méthode consistant à fournir différents concurrents aux sites de réactions, en fournissant un échantillon à la cuve de réaction ou à la baguette d'essai, cet échantillon comportant au moins un analyte ciblé, en fournissant des particules magnétiques enduites qui sont fournies avec des partenaires de liaison qui sont complémentaires d'au moins un analyte ciblé et de son concurrent respectif, de telle sorte que l'analyte ciblé ou chaque analyte ciblé vienne inhiber la liaison des particules magnétiques au site de réaction respectif par rapport à son concurrent respectif et en surveillant l'effet des particules magnétiques liées aux sites de réactions par le biais du concurrent ou de chaque concurrent sur l'inductance des bobines correspondantes afin de détecter séparément la quantité de particules magnétiques rattachées à chaque site de réaction , de telle sorte que le système de mesure se compose de toute une série de condensateurs variables, chaque condensateur étant raccordé à une bobine électrique respective pour définir un circuit respectif résonnant d'essai, de toute une série de boucles verrouillées en phase (PLL), chaque boucle verrouillée en phase étant raccordée à un circuit respectif résonnant d'essai afin de provoquer la résonnance du circuit et d'un circuit respectif mélangeur, d'un circuit résonnant de référence et d'une boucle PLL de référence pour provoquer la résonnance du circuit résonnant de référence, chaque circuit mélangeur assurant le mélange, en cours d'utilisation, de la fréquence résonnante du circuit résonnant de référence avec la fréquence résonnante du circuit résonnant correspondant d'essai afin de produire une fréquence de battement, et d'un contacteur assurant l'alimentation en fréquences de battement afin d'assurer une connexion sélective au système de mesure, le système de mesure se composant d'un régulateur qui permet d'ajuster les condensateurs variables et le contacteur.

8.  Une méthode de réalisation d'un titrage de liaison en utilisant un système détecteur de particules magnétiques et composé de toute une série de surfaces de réaction, de toute une série correspondante de bobines électriques, chacune d'entre elles se situant à côté d'une surface respective de réaction, et d'un système de mesure permettant de mesurer l'effet des particules magnétiques liées à une surface de réaction sur l'inductance de la bobine électrique associée, la sortie du système de mesure étant indicative de la quantité des particules magnétiques liées aux sites de réactions, la méthode consistant à fournir différents concurrents aux sites de réactions, en fournissant un échantillon à la cuve de réaction ou à la baguette d'essai, cet échantillon comportant au moins un analyte ciblé, en fournissant des particules magnétiques enduites qui sont fournies avec des partenaires de liaison qui sont complémentaire d'au moins un analyte ciblé et de son concurrent respectif, de telle sorte que l'analyte ciblé ou chaque analyte ciblé vienne inhiber la liaison des particules magnétiques au site respectif de liaison par le biais de son concurrent respectif et en surveillant l'effet des particules magnétiques liées aux sites de réactions par le biais du concurrent ou de chaque concurrent sur l'inductance des bobines correspondantes afin de détecter séparément la quantité de particules magnétiques rattachées à chaque site de réaction , de telle sorte que le système de mesure se compose de toute une série de condensateurs variables, chaque condensateur étant raccordé à une bobine électrique respective pour définir un circuit résonnant, d'un oscillateur commun à tous les circuits résonnants, d'un oscillateur commun à tous les circuits résonnants, de toute une série de détecteurs de phases permettant de détecter les différences de phases entre le signal provenant de l'oscillateur et les fréquences correspondantes du circuit résonnant et en produisant un signal correspondant de sortie, d'un contacteur auquel aboutissent les signaux de sorties et qui peuvent être actionnés de manière sélective pour envoyer les signaux de sortie à un système de surveillance et d'un contrôleur qui permet de contrôler le contacteur et d'ajuster les condensateurs en réponse aux signaux se sortie provenant des détecteurs de phases.

9.  Une méthode comme celle qui est décrite à revendication 7 ou à revendication 8, de telle sorte que les particules magnétiques enduites sont fournies avec des partenaires de liaison qui sont complémentaires d'au moins un analyte ciblé et de leurs concurrents respectifs.

10. Une méthode comme celle qui est décrite dans n'importe laquelle des revendications précédentes, de telle sorte que la série de surfaces de réaction est fournie dans une cuve de réaction ou sur une baguette d'essai, de telle sorte que les particules magnétiques sont fournies à la cuve de réaction ou à la baguette d'essai en même temps que l'échantillon.

11. Une méthode comme celle qui est décrite dans n'importe laquelle des revendications précédentes, de telle sorte que les partenaires de liaison et les analytes ciblés sont des substances biologiques ou chimiques.

12. Une méthode comme celle qui est décrite à revendication 11, de telle sorte que les partenaires de liaison et les analytes ciblés sont choisis à partir d'un anticorps et de l'antigène correspondant, d'une hormone et du récepteur de cette hormone, d'un enzyme et de son cofacteur, d'un facteur de transcription et de l'ADN, de sous-unités d'un complexe protéinique comme par exemple des protéines G, de n'importe quelle protéine de signalisation ou de transport et de son élément de contrôle, de lectines et de glycoprotéines, de lectines et de moitiés de carbohydrate, d'une protéine de réception et d'un lipoprotéine, d'un lipide et d'une lipoprotéine, de l'ADN et de l'ADN, ADN et ARN, ARN et ARN, APN et APN, APN et ADN, APN et ARN, de protéines de membranes de cellules et d'un virus, de protéines de membranes de cellule et de spores, de protéines de membranes de cellules et de bactéries.

13. Une méthode comme celle qui est décrite dans n'importe laquelle des revendications précédentes, si ce n'est que l'échantillon se compose d'une substance biologique ou chimique.

14. Une méthode comme celle qui est décrite dans revendication 13, si ce n'est que l'échantillon se compose d'un des éléments suivants : sang complet, plasma, sérum, urine, un échantillon d'eau (provenant, par exemple, d'un cours d'eau, d'un réservoir ou d'un lac), de réseau de tout-à-l'égout, d'épanchements agricoles, de sol et d'extrait de plante.

15. Une méthode comme celle qui est décrite dans n'importe laquelle des revendications précédentes, si ce n'est que les bobines comportent des spirales planaires.

16. Une méthode comme celle qui est décrite dans n'importe laquelle des revendications précédentes, si ce n'est que chaque bobine est enroulée.

17. Une méthode comme celle qui est décrite dans n'importe laquelle des revendications précédentes, de telle sorte que la série de surfaces de réactions est fournie dan une cuve de réaction ou sur une baguette d'essai.

18. Une méthode comme celle qui est décrite dans n'importe laquelle des revendications précédentes, de telle sorte que l'une des bobines est adjacente à un site de réaction sur lequel des particules magnétiques ne peuvent pas être liées de façon à agir comme un site de référence.

19. Une méthode comme celle qui est décrite dans n'importe laquelle des revendications précédentes, ce système se composant en outre d'un processeur pour calculer le nombre de particules liées à un site de réaction à partir de l'effet mesuré sur l'inductance de la bobine.

20. Une méthode comme celle qui est décrite dans n'importe laquelle des revendications précédentes, de telle sorte qu'un ou plusieurs des sites de réactions comporte(nt) toute une série de partenaires de liaison qui y sont rattachées.

21. Une méthode comme celle qui est décrite dans n'importe laquelle des revendications précédentes, ce système se composant en outre d'un générateur de champ magnétique pour créer un champ magnétique à proximité des sites de réactions, de façon à attirer des particules magnétiques en direction des sites de réactions.

# Fig.1.

# Fig.2(a).

# Fig.2(b).

## Fig.2(c).

## Fig.3.

$r^2 = 0.98$

# Fig.4.

# Fig.5.

# Fig.6.

EP 1 747 461 B1

## Fig.7.

## Fig.8.

# Fig.7a.

# Fig.10.

# Fig.9.

Increasing
magnetic
flux density

P

Q

R

S

T

54

50

60

# Fig.11.

## Fig.12.

## Fig.13.

Fig.14.

EP 1 747 461 B1

# Fig.15.

Unbound magnetic
particles are free to
rotate

High frequency magnetic
field produced by the
sensing coil

Immobilised
magnetic particles

54

Steady, converging magnetic field
from stud on magnet or electromagnet

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1146347 A

### Non-patent literature cited in the description

- **Luxton et al.** Use of External Magnetic Fields To Reduce Reaction Times in an Immunoassay Using Micrometer-Sized Paramagnetic Particles as Labels (Magnetoimmunoassay). *Analytical Chemistry,* 15 March 2004, vol. 76 (6), 1715-1719

- **Richardson et al.** A novel measuring system for determination of paramagnetic particle lables for use in magneto-immunoassays. *Biosensors & Bioelectronics,* 2001, vol. 16, 1127-1132